# EUROPEAN PATENT SPECIFICATION

(11) **EP 4 156 905 B1**
(45) Date of publication and mention of the grant of the patent: **18.11.2026**
(21) Application number: 21731061.4
(22) Date of filing: 27.05.2021
(51) Int. Cl.: A01G 23/02, A01G 23/08, B64C 39/00, B64C 39/02

(54) **METHOD AND SYSTEM FOR REMOTE OR AUTONOMOUS HOLDING A TREE TRUNK**
VERFAHREN UND SYSTEM ZUR ENTFERNTEN ODER AUTONOMEN HALTEN EINES BAUMSTAMMES
PROCÉDÉ ET DISPOSITIF POUR TENIR UN TRONC D'ARBRE À DISTANCE OU DE MANIÈRE AUTONOME

(30) Priority: 27.05.2020 SE 2050611; 16.11.2020 SE 2051335; 16.11.2020 SE 2051336; 25.05.2021 WO PCT/EP2021/063840; 25.05.2021 WO PCT/EP2021/063844; 25.05.2021 WO PCT/EP2021/063845
(43) Date of publication of application: 05.04.2023
(73) Proprietor: AirForestry AB, 753 23 Uppsala (SE)
(72) Inventor: ROMAR, Markus, 753 36 Uppsala (SE); GELIN, Olle, 747 91 Alunda (SE); ANDERSSON, Mauritz, 757 52 Uppsala (SE)
(74) Representative: Ström & Gulliksson AB
(86) International application number: PCT/EP2021/064297
(87) International publication number: WO 2021/239921

(56) References cited:
- WO-A1-2018/033925
- US-A- 3 369 673
- US-A1- 2016 205 872
- US-A1- 2018 215 466
- US-A1- 2018 335 372
- US-B1- 6 263 932

## Description

### Technical field of the Invention

The present invention relates in general to the field of tree harvesting and/or transporting and in particular to methods and systems for remote and/or autonomous holding at least a portion of a tree trunk during harvesting or holding at least a portion of a tree trunk during transporting.

### Background of the Invention

Traditional tree harvesting or tree falling has long been conducted by persons and equipment based on the ground. In earlier times, from the early twentieth century and going back to the early nineteenth century, little consideration was given to the state of the forest or to the ecosystem within the forest. Logging was done on a massive scale to keep up with the demand caused by the industrial revolution and the subsequent expansion of human life at the time. Depending on the terrain, tree harvesting process usually begins with experienced tree fellers cutting down a stand of tree parameter or by using heavy ground based manned harvesting machines.

The above-described methods represent a high level of risk, either to the environment or the people performing the work. Damage can also be done to the delicate ecology of the forest, known as the understory or underbrush, where smaller plants bind the soil together and provide a habitat to insects, birds, lichens, and fungus among other things.

Most importantly, many locations are extremely difficult to reach by land, even with the use of heavy equipment such as bulldozers, and removal of tree from such locations is expensive. Sometimes it may be desirable to harvest a single tree amongst a stand of tree, so called tree thinning, without disturbing the surrounding tree.

In US 6,263,932 it is disclosed an aerial tree harvesting apparatus. A first body of said apparatus is suspended from helicopter and a second body is suspended by cables from the first body. The apparatus is capable of delimbing and cutting the tree and thereafter transporting the harvested tree to another location.

US 2018/215466 discloses a machine operating in conjunction with an aircraft, such as a helicopter, for harvesting or removing trees. The aerial tree harvester is useful for harvesting trees from remote areas that are difficult to reach by land.

WO 2018/033925 discloses a management system for autonomous unmanned aircraft vehicle (UAV) fleet management for harvesting or diluting fruits.

US 2018/335372 discloses a a sample collection system includes an aerial robotic platform, an arm assembly coupled to the aerial robotic platform and comprising an arm that extends away from the aerial robotic platform, and a sample collector connected to a distal end of the arm, wherein the sample collector is configured to selectively remove one or more samples of agricultural material from a plant to be analyzed.

US 3369673 discloses a method of harvesting trees and to lifting and transporting apparatus for trees and other loads.

There is a need in the art for a method and apparatus for a more efficient remote or autonomous handling of a tree trunk during harvesting and/or transportation.

### Object of the Invention

The present invention aims at obviating the aforementioned problem. A primary object of the present invention is to provide an improved system for holding at least a portion of a tree trunk.

Another object of the present invention is to provide an improved method for holding at least a portion of tree trunk.

### Summary of the Invention

According to the invention at least the primary object is attained by means of the system having the features defined in the independent claim 1.

Preferred embodiments of the present invention are further defined in the dependent claims.

In a first aspect, the invention concerns a system (10) as defined by the combination of features of independent claim 1.

An advantage of this embodiment is that the holding position of at least a portion of a tree trunk may be optimized depending on the tree itself and/or of the characteristics of the area where it is located.

Still another advantage of the present invention is that transportation of at least a portion of a tree may be faster and more efficient compared to prior art since its holding position is taking into account not only characteristics of the tree itself but may also take into account parameters of its surrounding. This may result in a more efficient and/or secure transportation.

Yet another advantage is that the present invention provides for an integrated solution for unmanned holding of at least a portion of a tree trunk.

In various example embodiments of the present invention said means for holding is remotely and/or autonomously controlled.

The advantage of these embodiments is that the means for holding may be controlled together with and/or from the UAV or controlled separately from said UAV at a distance from said means for holding.

In various example embodiments of the present invention, it further comprising at least one means for delimbing, at least one means for debarking, at least one means for cutting and/or at least one means for harvesting.

The advantage of these embodiments is that not only cutting may be controlled at distance but also additional harvesting steps such as debarking, delimbing.

In various example embodiments the present invention said at least one remotely and/or autonomously controlled means for holding (105) directly and/or indirectly at least a portion of a tree trunk is configured to move directly or indirectly on ground and/or move directly or indirectly up and/or down on a tree trunk.

An advantage of these embodiments is that said means for holding may transport itself to a predetermined tree on ground and later be attached to the UAV for transportation of the tree trunk.

In various example embodiments of the present invention, said means for detecting said at least one tree parameter and/or at least one growing condition comprising a camera and/or using a database with digital information about said at least a portion of a tree and/or a tree within a predetermined distance from said at least a portion of a tree.

An advantage of these embodiments is that tree features may be detected on the fly and/or being detected prior to transporting/harvesting and stored digitally together with a position of the tree. In various example embodiments a digital marker may be attached to the tree configured to communicate with the UAV and transmitting information about at least one tree feature.

In various example embodiments of the present invention said UAV and said means configured for holding directly and/or indirectly at least a portion of the treetrunk is communicating with each other via one or more of WiFi, Bluetooth, radio communication, optical fibre and/or electrical wire.

An advantage of these embodiments is that the means configured for holding the tree trunk and said UAV can be physically separated from each other.

Another advantage of these embodiments is that said means for holding at least a portion of a tree trunk and said UAV may be controlled individually independently of each other.

In various example embodiment of the present invention, it further comprising means configured for automatically detect a final destination and/or locating a tree in a predetermined area and/or locating a tree at a final destination.

An advantage of these embodiments is that the tree localization may be performed fully automatic without the help of an operator. Such means may include one or more of a GNSS and/or a camera and/or optical sensor. Such means may also include machine learning/artificial intelligence in order to recognise a suitable tree and/or a suitable position of a tree trunk to attach said means configured for holding the tree trunk.

In various example embodiments of the present invention, it may comprise a synchronization unit for synchronizing the movement of at least two UAV for transporting cutting, holding, delimbing, harvesting and/or debarking of at least a portion of a tree trunk.

An advantage of these embodiments is that a plurality of UAV may be used in synchronism with each other for transporting heavy tree/trunks or portions thereof and that it is more efficient, less expensive and easier to use. The synchronisation unit may either be arranged in one of the UAV being a master UAV for the other slave UAV or in a remote-control unit for synchronising all UAV at a remote distance.

In various example embodiments of the present invention, it further comprises means for determining the number of UAV to be used together for transporting and/or holding said at least a portion of a tree trunk depending on said at least one tree feature and/or the distance between an original location of said at least a portion of a tree trunk to a final destination.

An advantage of this embodiment in that the load capacity of the UAV may be optimized, i.e., not using overly large UAV and/or excessive number of UAV. Another advantage of this embodiment is that the size of UAV may be reduced resulting in an increased maneuverability, less power consumption and/or usability.

In various example embodiments of the present invention further comprisingmeans configured for selecting at least a portion of a tree trunk to be transported depending on at least one detected tree parameter and/or at least one detected growing condition of said tree trunk to be transported and/or of another portion of a tree from which said tree trunk originates and/or of at least one tree grown within a predetermined distance from said tree trunk to be transported and/or a tree at said final destination.

An advantage of this embodiment is that the selection of a portion of a tree trunk to be transported can be made from a remote location.

Another advantage of the present invention is that it may have none or at least very little impact on the nature.In various example embodiments of the present invention it further comprising means configured for selecting at least one cutting position on at least a portion of a tree trunk depending on the at least one detected tree parameter and/or the at least one detected growing condition of at least a portion of a tree.

An advantage of these embodiments is that the holding position of the tree trunk may be selected depending on the desired cutting position of said tree trunk.

In various example embodiments of the present invention it further comprising means configured for directing said remotely and/or autonomously controlled UAV with at least a portion of a tree trunk to a final destination a certain point in time where said final destination and/or said certain point in time is depending on at least one detected tree parameter and/or at least one detected growing condition of said transported portion of a tree and/or of a remaining portion of a tree and/or of at least one tree grown within a predetermined distance from said transported portion of a tree.

An advantage of these embodiments is that transportation of at least a portion of a tree may be faster and more efficient compared to prior art since different kinds of portions of tree are directed to different locations depending on at least one tree feature, which means that a sorting is already made prior to arriving at a final destination depending on said at least one tree feature. This may result in a more efficient transportation chain to a customer.

In various example embodiments of the present invention it further comprising means configured for selecting at least a portion of a tree trunk to be harvested and/or transported depending on at least one detected tree parameter and/or at least one detected growing condition of said harvested and/or transported portion of a tree trunk and/or of a remaining portion of a tree trunk and/or of at least one tree grown within a predetermined distance from said transported and/or harvested portion of a tree trunk.

An advantage of these embodiments is that transportation of at least a portion of a tree trunk may be faster and more efficient compared to prior art since different kinds of portions of tree trunk may be selected out of customer needs, profit maximation and/or total harvesting time.

In a further aspect, the invention concerns a method as defined by the combination of features of claim 15.

In various example embodiments of the present invention further comprising the step of selecting a cutting position of a trunk of said at least a portion of a harvested tree trunk,at least a portion of a tree trunk to be harvested, at least a portion of a tree trunk during harvesting or at least a portion of a tree trunk during transporting depending on at least one detected tree parameter and/or at least one detected growing condition of said harvested portion of a tree trunk and/or of a remaining portion of a tree trunk and/or of at least one tree grown within a predetermined distance from said harvested portion of a tree and/or at least one tree at a final destination for said harvested and/or transported tree.

In various example embodiments of the present invention further comprising the step of transporting said at least a portion of a tree trunk, by said UAV, away from the original location of said at least a portion of a tree trunk to a final destination a certain point in time, where said final destination and/or said certain point in time is depending on said at least one detected tree parameter and/or said at least one detected growing condition of said at least a portion of a tree trunk and/or of a remaining portion of a tree trunk and/or of at least one tree grown within a predetermined distance from said at least a portion of a tree trunk and/or at least one tree at a final destination for said harvested and/or transported tree.

Further advantages with and features of the invention will be apparent from the following detailed description of preferred embodiments.

### Brief description of the drawings

A more complete understanding of the abovementioned and other features and advantages of the present invention will be apparent from the following detailed description of preferred embodiments in conjunction with the appended drawings, wherein:
- Fig. 1-5, 7-12: depict schematic pictures of different inventive remote and/or autonomous harvesting steps by using a system according to the present invention,
- Fig. 6: depicts an example embodiment of a unit comprising a remotely and/or autonomously controlled means configured for harvesting at least a portion of a tree and at least one means for gripping/holding said tree trunk and
- Fig. 13-41: depict schematic pictures of various means for holding directly and/or indirectly at least a portion of a tree trunk.

### Detailed description of preferred embodiments of the invention

The word tree used hereinabove and hereinbelow is a generic term for any tree(s) and/or any bush(es).

The word harvesting used hereinabove and hereinbelow is a generic term for removing at least a portion from a tree, i.e., cutting a portion of the tree, cutting the full tree and/or removing the tree with at least a portion of its roots from the ground.

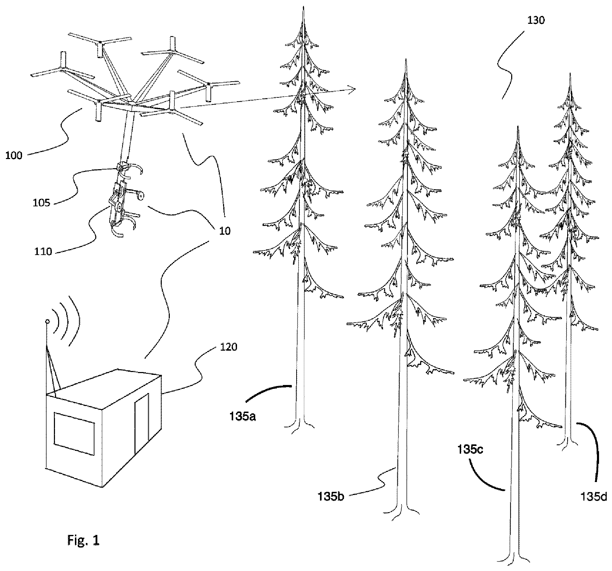

Figure 1-5, 7-12 depict schematic pictures of different inventive remote and/or autonomous harvesting and/or transporting steps of at least a portion of a tree by using an example embodiment of a system 10 according to the present invention. Said system may comprise a remotely and/or autonomously controlled means configured for harvesting and/or transporting at least a portion of a tree 110, a remotely and/or autonomously controlled Unmanned Aerial Vehicle 100, UAV, comprising, at least one means for holding 105 said tree trunk and being configured for transporting said harvested portion of said tree to another location, wherein said system comprising at least one means for detecting said tree to be harvested and/or transported, and a base station 120 for controlling said means configured for harvesting and/or transporting at least a portion of a tree and said UAV. Said system further comprising means for detecting at least one tree parameter of at least a portion of a tree and/or at least one growing condition of at least a portion of a tree. Said system further comprising means configured for selecting least a portion of a tree to be harvested and/or transported depending on at least one detected tree parameter and/or at least one detected growing condition of said transported/harvested portion of a tree and/or a remaining portion of a tree and/or of at least one tree grown within a predetermined distance from said transported portion of a tree.

In figure 1 said UAV 100 is carrying said remotely and/or autonomously controlled means configured for harvesting at least a portion of a tree 110 on its way to harvest a at least a portion of a tree 135a, 135, b, 135c, 135d in a forest 130. The UAV is remotely controlled by said base station 120 and/or autonomously controlled and optionally communicating with base station 120. The base station 120 may be a stationary unit or a mobile unit.

In figure 1-4, 7, 9, 10 the UAV 100 can be considered as a forestry forwarder and said means configured for harvesting at least a portion of a tree 110 can be considered to be a forestry harvester.

In an autonomously controlled means configured for harvesting at least a portion of a tree said means is able to operate without being controlled directly by humans whereas in a remotely controlled means configured for harvesting at least a portion of a tree said means is able to be operated from a remote distance controlled directly by humans. In various example embodiment said means configured for harvesting at least a portion of a tree and said UAV are remotely controlled. In various example embodiment said means configured for harvesting at least a portion of a tree and said UAV are autonomously controlled. In various example embodiments said means configured for harvesting at least a portion of a tree is remotely controlled and said UAV is autonomously controlled. In various example embodiments said means configured for harvesting at least a portion of a tree is autonomously controlled and said UAV is remotely controlled.

Said means for detecting a tree may be at least one of a camera or an optical sensor. The camera may be at least one of for example an IR-camera (Infrared-camera), NIR-camera (Near Infrared-camera), a VISNIR-camera (Visual Near Infrared-camera), a CCD camera (Charged Coupled Device-camera), a CMOS-camera (Complementary Metal Oxide Semiconductor-camera), a digital camera, a 3D camera e.g., stereo camera, time-of-flight camera or LiDAR. The optical sensor may at least one of a photodetector, pyrometer, proximity detector and/or an infrared sensor.

Said means for detecting a tree may be arranged on said UAV and/or said means configured for harvesting at least a portion of a tree.

Said means for detecting at least one of the group of tree parameters may be the same means as being used for detecting a tree and/or an additional means. The additional means may be at least one of a camera or an optical sensor. The camera may be at least one of for example an IR-camera (Infrared-camera), NIR-camera (Near Infrared-camera), a VISNIR-camera (Visual Near Infrared-camera), a CCD camera (Charged Coupled Device-camera), a CMOS-camera (Complementary Metal Oxide Semiconductor-camera), a digital camera, a 3D camera e.g., stereo camera, time-of-flight camera or LiDAR, a spectral camera, a heat sensitive camera, an ultrasonic measurement device, a radar device, a vibration device. The optical sensor may be at least one of a photodetector, pyrometer, proximity detector and/or an infrared sensor. A 3D picture may see through foliage and/or branches. A mean value of multiple 3D images may result in mm precision images. 3D pictures may reveal lots of information about branches, tree trunk and/or tree species. 3D images may be taken from an air born vehicle such as an UAV. The spectral camera may be used for measuring vegetation index (NDVI), i.e., a measure of the photosynthesis in a particular area. Heat sensitive cameras may be used for measuring the temperature of the surface of the tree trunk which in turn may be a measure of the health of the tree, an insect infestation tree has a higher surface temperature than a non-infested tree. Ultrasonic measurement and/or radar may be used for determining the inner form of the tree, i.e., rotten or hollow inner structure and/or the inner moisture content of the tree. Computer tomography and/or magnetic resonance imaging can give information about a portion of a tree down to a tree cell level.

Said means for detecting at least one of the group of tree parameters may be a camera or optical sensor in combination with Artificial Intelligence AI. AI may be used for training a model for recognizing one or a plurality of said tree parameters. Tree parameters may be recognized visually and/or by measurement and/or by at least on physical sample. Measurement may be made by optical inspection at a distance from the tree and/or by physical measurement, for instance integrated in said means for gripping/holding 105 said tree trunk. Said means for detecting at least one tree parameter may be a laser scanner attached to said UAV and/or said means for holding said tree trunk and/or said means for harvesting said at least a portion of a tree. By laser scanning the tree trunk the tree species may be determined and other surface conditions of the tree trunk such as the presence of any moss and/or any damage. Detected tree parameters may be compared with stored tree parameters in a data base for categorization and/or future choice and/or prioritization.

The final destination of said at least a portion of the tree may be determined by at least one of said detected tree parameters and/or at least one detected growing condition. Tree parameter can be considered to be intrinsic features and growing condition can be considered to be extrinsic features.

Tree parameters may for instance be a diameter of said at least a portion of a tree (top diameter, base diameter, mean diameter, median diameter), length of said at least a portion of a tree, tree species of said at least a portion of a tree and/or the weight of said at least a portion of a tree, dry content, age of tree, number of annual rings, distance between annual rings, color of annual rings, width of annual rings, amount of leaves, amount of fir needle, color, chemical composition of the tree, twig-free, deformation(s), cracks (dry cracks (partial or all trough), end crack, ring crack), rootstock, density, rot, discolored, dead tree, insect infested, microorganism infested, weather damage (storm, wind, fire, drought), machine damage (root, tree trunk), amount of fruits, seeds, berries, nuts, cones, flowers on the tree, form of root, root structure, root depth, root volume etc. The color of the tree may be an indicator of tree species. The color may be the color of the outer surface of the tree trunk or the color of a cut area. The form of the tree may be determined by a 3D camera. Form may comprise total volume of tree, leaves or fir needles, deformations, shape deviations etc. Tree parameters may also comprise material properties of the tree such as moisture content (%), tensile strength (MPa), flexural strength (MPa), compressive strength (MPa), shear strength (MPa), impact strength (KJ/m²), hardness (Brinell, Vickers, Rockwell), elasticity module (MPa), thermal conductivity (W/m°C), heat capacity (J/kg°C), Calorific value (MJ/kg), etc.

In various example embodiments said tree parameters may be detected manually by human or remote and/or autonomous by a separate unit prior to harvesting. Tree parameters may be stored digitally together with GPS position. In various example embodiments a digital marker may be arranged physically on tree prior to cutting the tree or when the tree is laying on ground. The digital marker may have stored information about at least one tree parameter. The input of tree parameters may be made manually prior to harvesting. The digital marker may be configured to communicate with said UAV. The communication may be performed by Bluetooth, wifi, radio communication and/or telecommunication (3G, 4G, 5G). A physical sample for detecting tree parameters such as density, rot and/or dry content may be made manually prior to harvesting and/or automatically by a sample detection means added to the means for holding the tree trunk and/or the means configured for harvesting at least a portion of a tree. Such sample detection means may be a suitable tool for removing a predetermined amount of the tree to be analysed. The removal of said predetermined amount to be analysed may be made by drilling, sawing or cutting. The analyzation of said predetermined amount of the tree may be made while the UAV is at or near the tree or said predetermined amount of tree may be brought to an analyzation station at a distance from the tree. A selection of where to remove said predetermined amount of the tree may be made by using said camera. Suspected rotten or insect infested area may be detected by the camera and thereafter a sample of such area may be removed and analyzed. Different portions of a single tree and different tree may be catagorized differently depending on the outcome of the analysis, i.e., depending on the tree parameters a specific portion of a tree may fall into one or a plurality of different categories. If a specific portion of a tree may fall in a plurality of different categories a selection may be based on the value or the current demand in the market.

Growing conditions may for instance be #tree per unit area and/or growth potential.

Growing condition may also be biotic environmental factors (interaction of organism of the same species and/or interaction of organisms of other species) such as mount of dead tree/wood within a predetermined area, interaction and/or competition of other species, gas and fragrance from plants, temperature of other plants etc. Fungal infestation and insect infestation may be spread over a large area. It may be advantageous to harvest non infested tree within a predetermined time after having detected an infested tree in a predetermined area. Fungal and insects may spread over several km. Competition for water, nutrition, and sun hours may be within a distance of 0-50 m. Advantageous interaction/competition situation may be made through sorting out plants in predetermined positions in order to get optimal conditions for the remaining ones.

Growing conditions may also be abiotic environmental factors climate (temperature, precipitation etc), topography, ground temperature, geology, hydrology, vegetation, soil, earth deposit, soil depth, surface blockage, minerals, ground carbon contents, ground nitrogen content, ground carbon nitrogen ratio, PH value, bas kat ions, amount of trace elements, physical or chemical erosion, environmental condition, wind etc. Abiotic environmental factors may also be the type of land such as forest land, arable land, agricultural land, natural pasture, mountain impediment, protected area, power line area, military area, built up land etc.

At least one tree parameter and/or growing condition may be used as a factor for determining the usage, demand, storage, quality of the at least a portion of tree. This in turn may be used for determining the final destination of a particular portion of a tree.

Gas sensors may be used to detect water quality (carbon oxide content, methane content, oxygen content etc.).

The UAV may have one or a plurality of propellers. In figure 1-4 said UAV is exemplified to have 6 propellers arranged symmetrically around an origin.

The base station 120 may, when remotely controlled, be operated by at least one human being, whereas, when autonomously controlled, be a base station 120 with programmed software algorithms used for supporting the autonomous UAV and/or the means configured for harvesting at least a portion of a tree. The base station 120 may be a stationary unit or a mobile unit.

Said means for holding the said tree 105 may be at least one movable gripping arm. In various example embodiments said means for holding said tree 105 may be one or a plurality of metal bars which may at least partially penetrate a tree trunk. In various example embodiments said means for holding said tree 105 may be a unit surrounding said tree trunk and being able to change its holding area and thereby compress around the tree trunk for securing purpose and decompress for releasing a tree trunk or entering a tree to be harvested. Said means for holding said tree 105 may comprise said sample detection means.

In various example embodiments said means configured for harvesting at least a portion of the tree may be arranged with means for attaching itself to said tree trunk. In various example embodiments said means configured for harvesting at least a portion of a tree is also configured for moving up and down along the trunk of the tree. The movement may be performed by at least one electrically driven wheel travelling on said tree trunk. In various example embodiments at least one wheel may be electrically driven for enabling movement up and down said tree trunk and at least one other wheel is arranged for friction reduction during said movement. In various example embodiments at least to wheels are configured to attach, secure and move said means configured to harvesting at least a portion of a tree.

In various example embodiments said means configured for harvesting at least a portion of the tree is also configured for moving on ground. The movement can be made via a plurality of wheels or legs and/or as a tracked vehicle.

Said UAV 100 and said means configured for harvesting at least a portion of the tree may be communicating with each other via one or more of WiFi, Bluetooth, radio communication, telecommunication (3G, 4G, 5G), optical fibre and/or electrical wire. In various example embodiments said control unit and said UAV and/or said means configured for harvesting at least a portion of the tree may be communicating with each other via one or more of WiFi, Bluetooth, radio communication, telecommunication (3G, 4G, 5G). Depending on the distance and/or communication quality between the control unit and said UAV and/or said means configured for harvesting at least a portion of a tree the communication may change from one type of communication to another.

In various example embodiments said means configured for harvesting at least a portion of the tree is connectable to an underside of said UAV 100. In various example embodiments said means configured for harvesting at least a portion of the tree may be released from said UAV directly onto a tree to be harvested or on the ground at or near the tree to be harvested. In various example embodiments said means configured for harvesting at least a portion of the tree may be provided at a distance from said tree to be harvested from a land vehicle. The means configured for harvesting at least a portion of the tree may of its own motion move from the position on ground to the desired tree to be harvested. Communication between said UAV and said means configured for harvesting at least a portion of a tree may at any desired time result is a pick-up of said means configured for harvesting at least a portion of a tree by said UAV. The pickup of said means configured for harvesting at least a portion of a tree by said UAV 100 may be made on ground if there is enough space or on a trunk of a tree.

In various example embodiments the UAV 100 may comprise a power unit for powering said UAV 100 and said means configured for harvesting at least a portion of said tree 110. The power from said power unit in said UAV 100 may be delivered to said means configured for harvesting at least a portion of a tree 110 via at least one power cable. The power unit may be an electric motor and/or an internal combustion engine.

In various example embodiments said UAV 100 may comprising at least a first power unit for powering said UAV 100 and said means configured for harvesting at least a portion of a tree 110 may comprise at least a second power unit for powering said means configured for harvesting at least a portion of a tree 110. The power unit in said UAV 100 may be electrical and/or an internal combustion engine. The power unit in said means configured for harvesting at least a portion of a tree 110 may be electrical and/or an internal combustion engine.

In various example embodiments said means configured for harvesting at least a portion of a tree 110 is also configured for delimbing a tree. The delimbing may be performed from top to bottom if said means configured for harvesting at least a portion of the tree is initially arranged on said tree to be harvested from above. In various example embodiments said delimbing may be performed from bottom to the top if said means configured for harvesting at least a portion of a tree is moved by its own motion from ground to the tree to be harvested or attached to a lower section of the tree to be harvested from the UAV. The delimbing may be performed by one or a plurality of cutting means, snapping means, and/or shearing means. The cutting means may be by cutting chains and/or by rotary cutting disks. The cutting may be performed by a straight movement along said trunk of said means configured for harvesting at least a portion of a tree and/or by a serpentine movement along the trunk by said means configured for harvesting at least a portion of a tree.

In various example embodiments said means configured for harvesting at least a portion of a tree 110 is configured to be in direct communication with a remote operator and/or a remote base station 120 or indirect communication via said UAV 100 with a remote operator and/or a base station 120. The indirect communication, i.e., the UAV 100 as access point, with said means configured for harvesting at least a portion of a tree 110 may be used if the same information is to be sent to both UAV 100 and said means configured for harvesting at least a portion of a tree 110. The UAV 100 may be in various example embodiments work independently from a remote base station 120. The indirect communication may also be used if said UAV 100 is arranged in between said base station 120 and said means configured for harvesting at least a portion of a tree 110.

In various example embodiments said UAV and/or said means configured for harvesting at least a portion of a tree may comprise means configured for automatically locating a tree and/or a predetermined area to be harvested. Said means configured for automatically locating a tree and/or said predetermined area to be harvested may comprise at least a Global Navigation Satellite System, GNSS. Said means configured for automatically locating a tree and/or a predetermined area to be harvested may comprise at least one camera or optical sensor. Said means configured for automatically locating a tree and/or a predetermined area to be harvested may comprise at least a camera in combination with Artificial intelligence or machine learning algorithms for speeding up the detection of a suitable area to arrange said means configured to cut a tree trunk.

Now returning to figure 1 where the UAV 100 is on its way to a tree 135 in forest 130 to be harvested. The tree 135 may be preselected, i.e., selected prior to arrival to the tree 135. Alternatively said tree 135 may be selected by the UAV 100 in combination with the base station 120 once the UAV 100 is at or near a position above said tree 135. The selection may be performed by identifying a picture of the tree 135 from above with stored pictures in said control station 120 and by means of a selection algorithm select a tree for tree thinning purpose or other selection criteria.

In figure 1 the forest 130 comprises four tree 135a, 135b, 135c, 135d, all of which may have equal or different tree parameters and/or growing conditions. The forest may of course have a larger or smaller amount of tree than the depicted 4 as shown in figure 1-4. A tree to be harvested may be determined by at least one of said detected tree parameters and/or growing conditions. In various example embodiments the order of harvesting tree 135a, 135b, 135c, 135d may be selected out of minimizing a total harvesting time. In various example embodiments a particular tree may be selected because there is a demand of such tree parameters from a particular customer. In various example embodiments a particular tree may be selected to be harvested due to a particular tree thinning strategy, e.g., smallest or largest tree in a group of tree, diameter of said at least a portion of a tree, length of said at least a portion of a tree, tree species of said at least a portion of a tree and/or the weight of said at least a portion of a tree, dry content, twig-free, rootstock, density, rot, discolored, dead tree and/or insect infested. Tree parameters may be detected prior to arriving with the UAV 100 to the forest 130. This may be made manually and/or automatically. Manual detection may be made by human beings registering at least one tree parameter in a digital data base. Automatic tree parameter may be made by a separate UAV and/or a land-based vehicle. Detection may be non-destructive and/or destructive. Non-destructive methods may be made by visual inspection by a human being or by registering the tree by a suitable optical means such as a camera. Destructive detection may be made by removing a predetermined amount of a tree and analyzing it on site or at a remote site. A tree to be harvested may be selected depending on its distance to the final destination, e.g., choosing tree with a particular set of tree parameters as close to the final destination as possible. A tree to be harvested may be selected in order to maximize the value of the total amount of harvested tree in a particular time frame. A tree to be harvested may be selected in order to maximize the value of the remaining tree in the forest. A decision of how much of a particular tree to be harvested may be made depending on at least one tree parameter.

In various example embodiments the selection of already harvested portions laying on ground may be made depending on at least one tree parameter. In various example embodiments a correct size of UAV may be made depending on at least one tree parameter of said at least a portion of tree laying on the ground. In various example embodiments a correct choice of number of UAV for transportation may be made depending on at least one tree parameter of said at least a portion of tree laying on the ground.

In various example embodiments the system further comprising means configured for determining a certain point in time said at least a portion of a tree should be harvested and/or transported. A tree 135a having a first set of tree parameters may be selected to be harvested and/or transported prior to a tree 135c having a second set of tree parameters.

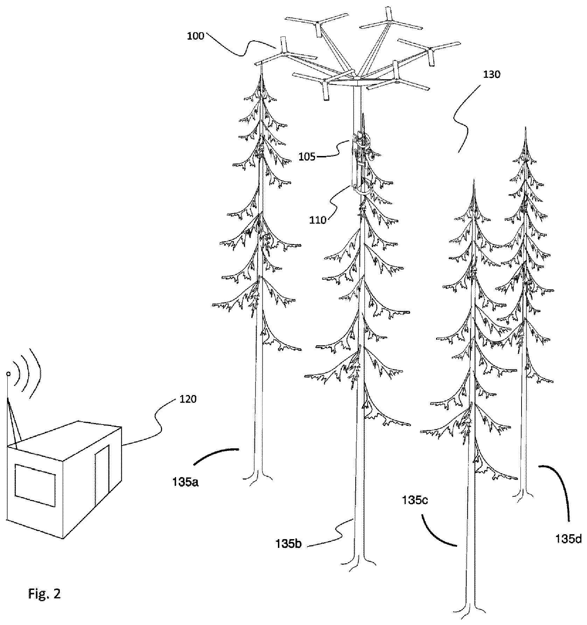

In figure 2 the selected tree 135 has been attached on its top portion by at least one means for gripping 105 said tree trunk. A gripping position on said tree 135 may be selected depending on the expected lift weight of the harvested portion of said tree. If the full tree is to be harvested a greater diameter of said trunk of the tree is to be chosen as a gripping position compared to if just a portion of the tree is to be harvested.

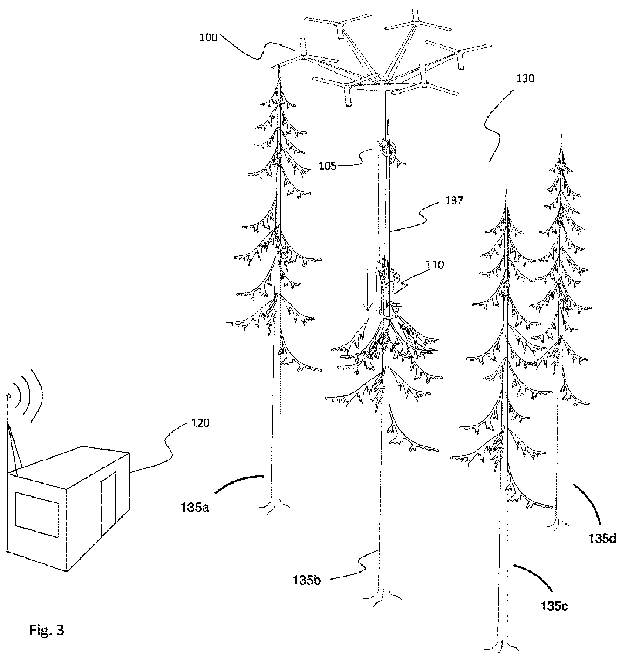

In figure 3 the autonomously controlled means configured for harvesting at least a portion of a tree 110 has been moved a distance down from said at least one means for gripping 105 said tree trunk. On its way down said means configured for harvesting at least a portion of a tree 110 also has delimbed the tree 135 leaving a bare tree trunk 137 without twigs and limbs. The powering of said means configured for harvesting at least a portion of a tree 110 may be provided by said UAV 100 or by a power unit in said means configured for harvesting at least a portion of a tree 110. In case of power supplied from said UAV to said means configured for harvesting at least a portion of a tree 110 said power may be delivered via one or a plurality of power cables arranged on between said UAV 100 and said means configured for harvesting at least a portion of a tree 110. A power unit in said means for cutting a tree trunk 110 may be one or a plurality of battery packs. In various example embodiments a first battery pack maybe used for communication with the UAV 100 and/or a base station 120. A second battery pack may be used for moving said means for harvesting at least a portion of a tree 110 up/down on a tree trunk and/or for moving said means for harvesting at least a portion of said tree 110 on ground.

Instead of harvesting trees and/or bushes (tree) by means of cutting at least a portion of said tree, said tree may be removed from ground with at least a portion of its root system. This removal may be made by using the UAV as removal means, i.e., gripping a tree and using the upward traction power of the UAV for removing the tree from ground. This technique may only be used for small tree, for instance when invasive arts is to be removed from a particular area at an early stage for not causing damage on the remaining portion of the forest.

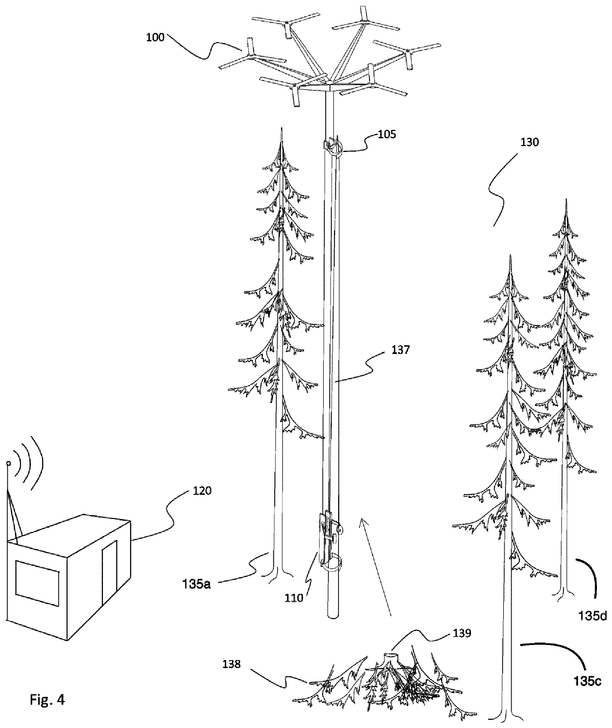

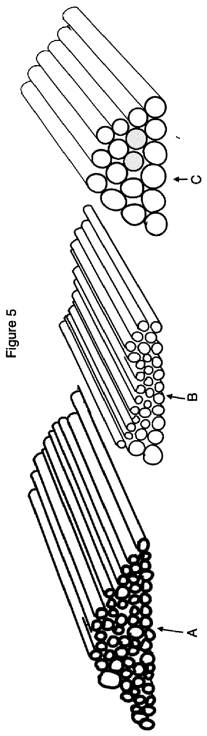

In figure 4 the tree 135 has been delimbed, harvested and on its way to a location away from the original location of the tree. What is left of the original tree 135 at its original location is a pile of limbs 138 and a tree stump 139. In the depicted example embodiment said means configured for harvesting at least a portion of a tree 110 is still arranged on said tree trunk when the tree is transported away from the original location of the tree. In various example embodiments it is provided means configured for directing said remotely and/autonomously UAV 100 with said at least a portion of a tree to a final destination where said final destination is depending on said detected tree parameters. In various example embodiments a first type of tree species may be transported to a first final destination whereas a second type of tree species may be transported to a second final destination. Figure 5 illustrates 3 different final destinations A, B and C respectively. The final destination may have a first set of tree parameters, final destination B may have a second set of tree parameters and final destination C may have a third set of tree parameters. Said first, second and third set of tree parameters may be different. Tree parameters may for instance be a diameter of said at least a portion of a tree, length of said at least a portion of a tree, tree species of said at least a portion of a tree and/or the weight of said at least a portion of a tree, dry content, twig-free, rootstock, density, rot, discolored, dead tree, insect infested. At least one of said final destinations A, B or C may be an intermediate storage on ground. At least one of said final destinations A, B or C may be a mobile storage, for instance a timber truck.

In various example embodiments said final destination A, B or C may as in figure 5 be close to each other. In various example embodiments said final destination A, B or C may be remote to each other. In various example embodiments more or less final destinations than 3 as depicted in figure 5 may be present.

In various example embodiments the final destination A may be for timber having a length within a predetermined interval. The final destination B may be for timber having a predetermined weight per unit of timber. The final destination C may be for rotten tree, discolored tree, dead tree and/or insect infested tree.

In various example embodiments the final destination A may be allocated with timber having a first set of tree parameters and a requirement to be filled with timber prior to a final destination B which may have the same tree parameters but will be filled with timber later in the tree harvesting process. It may be that the final destination A is close to a road or at a timber truck, whereas final destination B may be an intermediate storage closer to the harvesting area compared to final destination A and far away from any available road.

In various example embodiments the first final destination A may be for timber to be used as pulp. The second final destination B may be for building material, such as plank. The third final destination C may be for biomass material.

Depending on the location of said first second and third final destination, A, B and C respectively, and the location of the tree to be harvested an optimization may be performed prior to harvesting in order to minimize the time required to harvest and transport a given number of tree in various categories. A forest having numerous tree, such optimization may result in harvesting a first set of tree parameters first and a second set of tree parameters later in time for a first harvesting area whereas in a second harvesting area a third set of tree parameters, different to said first and second may be chosen to be harvested first. The optimization may be depending on the density of tree per unit area, the topography of the nature where the tree are located, the type of tree present in a predetermined area and/or the purpose of the harvesting technique, sorting out or complete disforestation.

At least one tree parameter and/or growing condition may steer the final destination. Coordinates for different final destinations may be pre stored in the UAV and/or base station. Different sets of tree parameter and/or growing condition may be linked to different final destinations, i.e., coordinates.

A plurality of portions of tree may be transported simultaneously by at least one UAV. The choice of portions of tree to be transported may depend on the distance between the portions of tree and/or the distance between the plurality of portions of tree to be transported and the final destination. The choice of portions of tree to be transported may also depend on the total remaining battery power and/or remaining fuel of the UAV(s).

Said means configured for directing said remotely and/autonomously UAV with said at least a portion of a tree to a final destination depending on said detected tree parameters may also be configured for determining a certain point in time said at least a portion of a tree should be arrived at said final destination. Not only the destination may be determined depending on one or a plurality of tree parameters, also the certain point in time a particular at least a portion of a tree should arrive at a predetermined location may depending on one or a plurality of tree parameters. In a first example embodiment a particular tree parameter is to be picked up by a timber truck and transported away days or weeks from a particular harvesting time. This may be a trigger factor for either just harvesting the particular tree and let them lay on the ground or simply postpone the actual harvesting said days or weeks until said pickup by timber truck is to take place. In a second example embodiment timber at a particular final destination A, B, or C may be sorted so that a particular set of tree parameters arrives first, time A, at a particular final destination, i.e., furthest down in a pile of timer. A second set of tree parameters arrives later, time B and will be arranged on the middle of the pile of timber. A third set of tree parameters arrives latest, time C, and will be arranged on a top portion of the pile of timber. Having sorted different sets of tree parameters at one and the same location may make transport logistics more effective in picking up the correct type of timber.

The predetermined distance of at least one tree grown from said transported portion of a tree may depend on topography and/or invasive species. An insect infested and/or fungal infested tree in a predetermined area may result in harvesting relatively far away from the infested tree, i.e., a large predetermined distance up to several hundred of meters, whereas in a healthy environment said predetermined distance may be less than 50 meters and in some cases may be less than 20 meters. The predetermined distance from said at least a portion of a tree may be at least one final destination of said at least a portion of a tree. The holding position of said tree trunk to be transported may be chosen with respect to how tree trunks are stored at said final destination. A final destination may be chosen during transporting and/or harvesting. A final destination may be determined before a tree trunk is harvested. A final destination may be shosen depending on at least one tree parameter and/or growing condition. The system may be configured to detect at least one final destination by use of a camera, map and/or data base with information of the forest. The final destination may be chosen with respect to the particular characteristics of the tree trunk to be transported, the power capacity of the UAV, the terrain and/or actual position of timber trucks.

The system may further comprising means for determining the number of UAV to be used together for transporting at least one portion of a tree depending on said at least one tree parameter and/or the distance between an original location of said at least a portion of a tree to and said final destination. Long and/or heavy portions of tree and/or a transport of a plurality of portions of tree may require more than one UAV for transporting said portion of the tree(s) from its original location to its final destination. At least one tree parameters may be used to allocate the correct number of UAV to be used in synchronism for transporting said portions of tree(s).

The plurality of UAV may either attach to the portion of tree to be transported or attach to another UAV for synchronously transporting said portion of tree away from its original location to its final destination. The attachment of one UAV to another UAV may be made directly via a connection arrangement or via a wire or bar in between said two UAV. A plurality of UAV may also be necessary if the distance between the original location and the final destination is very long. If the distance between the original location and the final destination is long, an intermediate storage location in between said original location and the final destination may be necessary for later pick up and transport to the final destination. By using a plurality of UAV in synchronism may be advantageous since smaller UAVs may be used which is easier to handle and easier to use in a dense forest. Synchronization of a plurality of UAV for working together in transporting at least a portion of a tree may be made through a base station and/or a master UAV. When it is determined that more than one UAV is needed, one of said UAV may be assigned a master role and the other UAV a servant role. The master role may be assigned to the UAV first approaching the portion of tree to be transported or to a specific type of UAV. Alternatively, the plurality of UAV may be attached together for transport and the base station assigned one of them as a master and the other as servant UAV. Each and every UAV may communicate with each other and to the base station. In yet an alternative embodiment the base station is the synchronization unit, i.e., all UAV are assigned as servant UAV and follow one and the same instructions sent out from said base station.

In various example embodiments single UAV transportation may be prioritized before plurality of UAV transportation. This may be the case in an early stage of harvesting when the forest is still dense and there are lots of UAV available.

In various example embodiments transportation is based on total lift capacity of the UAV(s). A transportation optimization may in such case be based on the order the tree should be picked up in order to minimize the clearing of a particular area. In various example embodiments only tree having a predetermined tree parameter should be prioritized before all other tree parameters and/or growing conditions.

In various example embodiments a particular type of UAV, size and/or capacity may be used depending on at least on tree parameter. In various example embodiments tree parameters sent to said base station may allocate a particular type of UAV out of a UAV fleet which may make the transportation as effective as possible.

Tree parameters may be detected by non-destructive evaluation, such as camera or optical sensors. Tree parameters may also be detected by removing physical sample from the tree and analyzing said sample. The removal may be in form of cutting drilling or sawing and predetermined amount of the tree at a predetermined position. The analyzing may take place directly in the UAV or means attached to said UAV. Alternatively said analyzing may be made at a remote location from the tree. Tree parameter(s) may be detected by means attached to the same UAV which is used for transporting/harvesting the portion of tree and/or by a human being prior to harvesting/transportation and/or by a land based remotely and/or autonomously controlled Unmanned Vehicle (100) and/or by means attached to a separate UAV only used for detecting tree parameters and/or growing conditions. In various example embodiments detection of tree parameters and/or growing conditions may be made simultaneously and by separate means (UAV, human being, remotely and/or autonomously controlled Unmanned Vehicle) as harvesting and/or transportation in a particular area.

Instead of as in figure 4 delimbing and cutting the full tree, said tree may be harvested in sections starting from above and going down the trunk of the tree. When a section of the tree has been harvested, said means configured for harvesting at least a portion of a tree 110 may be left on the still uncut portion, the stump, of the tree while the UAV is transporting away the harvested portion from the original location of the tree. A cutting position on a tree trunk may be determined before arriving with means for cutting to a particular tree, i.e., It may have been detected by a human or information may be taken from data storage. The cutting position may be determined during harvesting and/or transporting. In such case the determining of a cutting position may be made by means of at least one camera attached to the UAV. The cutting position may also be determined by a previous cutting position, i.e., when a tree is first cut for producing a first harvested tree trunk the second cut on said remaining tree may be determined with respect to said first cut for producing a tree trunk with a predetermined length. The remaining tree may be a transported tree, un unharvested tree or a tree laying on ground. A cutting position may also be selected to be within a predetermined interval of the tree trunk. Said means for cutting a tree may also be capable of debarking and/or delimbing a tree trunk.

Delimbing means may be arranged on a top portion and on a bottom portion of said means configured for harvesting at least a portion of a tree 110. By arranging said delimbing means on both sides of said means configured for harvesting at least a portion of a tree 110 makes it possible to provide said means configured for harvesting at least a portion of a tree 110 from above on the tree or from root of said tree. The delimbing means is provided at the front position with respect of the direction of movement of said means configured for harvesting at least a portion of a tree 110.

In various example embodiments said means configured for harvesting at least a portion of a tree 110 may be provided by said UAV directly on a portion of the tree to be harvested where there are no limbs.

In various example embodiments said means configured for harvesting at least a portion of a tree 110 may be dropped on the ground at or near the tree to be harvested.

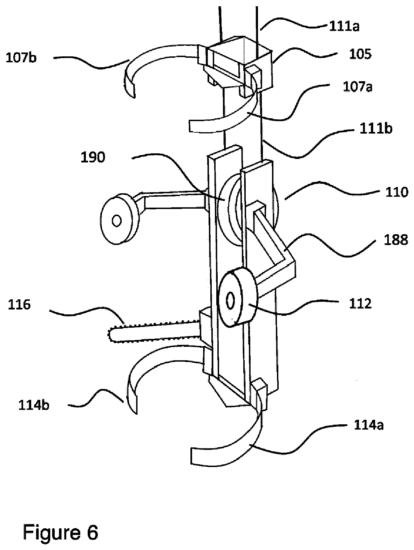

In figure 6 it is depicted a schematic picture of an example embodiment of said means configured for harvesting at least a portion of a tree 110 and said means for holding said tree 105. Said holding means 105 may be provided at a distance from said UAV 100, for instance via one or a plurality of wires 111a. The holding means 105 is in this example embodiment in the form of a first movable curved arm 107a and a second movable curved arm 107b. Said arms (107a, 107b) can be set to any position between a fully open position and fully closed position in order to allow to embrace a tree trunk and also to grip and release the same. Said means configured for harvesting at least a portion of a tree 110 comprises in figure 6 a first movable curved fixing/delimbing arm 114a and a second movable curved fixing/delimbing arm 114b. Said first and second movable curved fixing/delimbing arms (114a, 114b) may be set to any position between a fully open position and fully closed position on order to allow to embrace a tree trunk and also to fixing the same. Said fixing/delimbing arms may have a sharp edge on its top portion and/or its bottom portion for delimbing the tree as the means configured for harvesting at least a portion of the tree moves along the trunk of said tree. Said means configured for harvesting at least a portion of a tree 110 also comprises a cutter 116. The cutter may be in the form of an electrically driven or internal combustion engine driven chain saw. The chain saw may be arranged movable in said means 110 in order to cut a tree while said means is in a fixed position on said trunk of the tree.

The delimbing means 114a, 114b may be optional. The holding means 105 may be provided at a distance from said means configured for harvesting at least a portion of a tree 110. Said holding means 105 may be attached at said means configured for harvesting at least a portion of a tree 110 with at least one wire 111b or at least one metal bar or other suitable attaching means. In various example embodiments said holding means 105 may be mechanically separable from said means configured for harvesting at least a portion of a tree 110 meaning that the holding means may attached at a fixed position at the tree while the means configured for harvesting at least a portion of the tree may of its own motion move along the trunk of the tree with no mechanical attachment to the holding means 105. The means for harvesting at least a portion of a tree may cut a portion of a tree and stay on the still not harvested portion of the tree while said UAV is moving away with the harvested portion to another location. Delimbing may take place by said means configured for harvesting at least a portion of a tree 110 while said UAV is moving away said harvested portion of the tree. The UAV may return to the same tree and remove yet another portion of it and said means configured for harvesting may stay on the not yet harvested portion or attach to the harvested portion or the UAV and move together with the UAV to another location. The holding means 105 and the means configured for harvesting at least a portion of a tree 110 may communicate with each other and/or independently of each other communicate with the UAV and/or the base station 120. A camera may be used, attached either on said UAV or said may be used for means configured for harvesting at least a portion of a tree 110, in order to simplify attachment of said UAV with said means configured for harvesting at least a portion of a tree 110. The attachment of said UAV and said means configured for harvesting at least a portion of a tree 110 may be a fully automatic process. Said means configured for harvesting at least a portion of a tree 110 may have at least one electrically driven wheel 190 for allowing movement of said means configured for harvesting at least a portion of a tree 110 along a trunk of a tree. One or a plurality of supporting wheels 112 may be used for securing said means configured for harvesting at least a portion of a tree 110 onto said trunk of said tree and for reduce friction while moving along said trunk of said tree. Said supporting wheel(s) may be arranged on arms 188 which may be movable in order to secure said means configured for harvesting at least a portion of a tree 110 on said trunk of said tree.

In various example embodiments said means configured for harvesting at least a portion of a tree 110 may be made of two separable parts, a first part that is mainly configured for holding the tree and a second part, capable of moving up and down along the trunk of the tree, which can delimb and/or cut the tree.

Said means for holding 105 may change its position onto said tree trunk during cutting, delimbing, harvesting, transporting and/or debarking said tree trunk.

A selection of trees to be harvested may be made by harvesting all trees within a predetermined area, every second tree within a predetermined area, trees of a particular type, trees having a specific age, trees having a specific length and/or trees with a predetermined growing condition or similar.

In various example embodiments said means configured for harvesting at least a portion of a tree 110 may be provided at or near the tree to be harvested either by the UAV or by a land vehicle. Said means configured for harvesting at least a portion of a tree 110 may of its own motion move towards a predetermined tree to be harvested and arrange itself at a predetermined position on the trunk. An UAV may, before said tree is cut, be arranged at a top position of said tree and grip the trunk of the tree on a position safe to lift the portion to be cut. Said means configured for harvesting at least a portion of a tree 110 cuts the tree and the UAV moves the harvested tree away from the original location of the tree. The harvested tree has all of its limbs left on the tree. Said means configured for harvesting at least a portion of a tree 110 may follow the harvested tree from the original location of the tree or stay at the tree stump.

In various example embodiments said means configured for harvesting at least a portion of a tree 110 may be provided at or near the tree to be harvested either by the UAV or by a land vehicle. Said means configured for harvesting at least a portion of a tree 110 may of its own motion move towards a predetermined tree to be harvested and arrange itself at a predetermined position on the trunk. An UAV may, before said tree is cut, be arranged at a top position of said tree and hold/grip the trunk of the tree on a position safe to lift the portion to be cut. Said means configured for harvesting at least a portion of a tree 110 first moves upwards the trunk of the tree in order to delimb the same. Thereafter said means configured for harvesting at least a portion of a tree 110 moves to a predetermined position and cuts the tree. The UAV moves the harvested tree from the original location of the tree. The harvested tree is delimbed. Said means configured for harvesting at least a portion of a tree 110 may follow the harvested tree from the original location of the tree or stay at the tree stump.

The system may comprise a plurality of UAV and a plurality of means configured for harvesting at least a portion of a tree all of which may work together for efficiently harvesting tree in a forest.

A plurality of UAV may work together synchronously for transporting a harvested portion of a tree or a plurality of harvested tree. This may be arranged so that a first UAV is a master UAV and at least a second UAV is a slave UAV. The master UAV may grip the tree to be harvested at a predetermined position on its trunk. Said at least one slave UAV may be attached to said master UAV via wires. Said at least one slave UAV may be arranged at an elevated position with respect to the master UAV. A synchronisation unit makes sure the master UAV and the at least one slave UAV works in synchronisation with respect to movement and distance to each other. The synchronisation unit may be arranged in the master UAV or arranged in the control unit controlling said master UAV and said at least one slave UAV.

Instead of a single UAV gripping said portion of the tree to harvest a plurality of UAVs may grip the same tree to be harvested.

In various example embodiments of the present invention said UAV is designed to be capable of flying as to control position, velocity, orientation and rotational speed and via a rigid connection impart its motion to the means for cutting/delimbing said tree. In this embodiment the UAV controls the movement of the means for cutting/delimbing said tree.

In various example embodiments of the present invention the UAV may be used to reduce load on said cutting means 116 during cutting. This may be performed by first holding a predetermined portion of the tree by said holding means 105 and thereafter apply a lift force by said UAV while cutting the tree by the means for harvesting at least a portion of the tree 110. This may be advantageous since a reduced load on the cutting means 116 from the weight of the tree may increase the efficiency of the cutting procedure and/or require less power compared to cutting a tree with the full load onto said cutting means 116.

In various example embodiments a separate land vehicle may be used with means for harvesting at least a portion of said tree while the UAV is lifting the tree. This may be advantageous since there is no load on the cutting means from the weight of the tree which may increase the efficiency of the cutting procedure and/or require less power compared to cutting a tree with the full load of the portion to be cut on said cutting means.

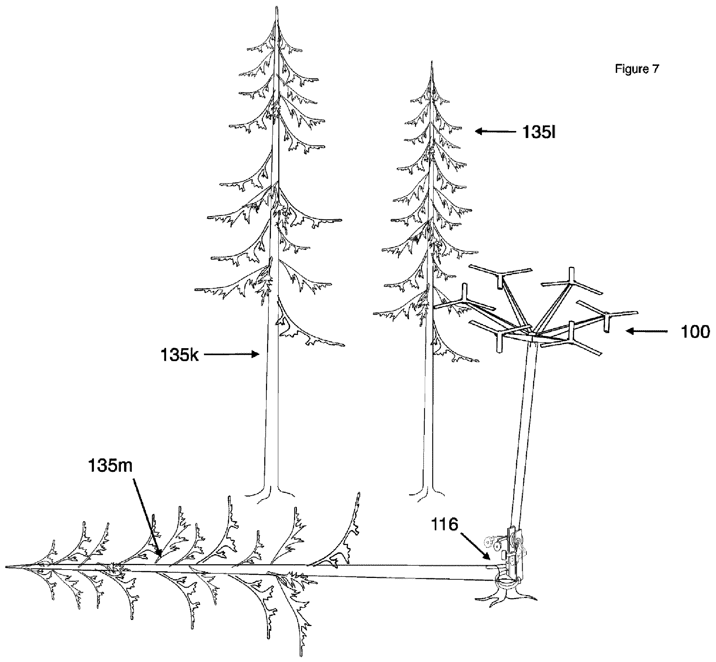

Figure 7 depicts an UAV 100 with means for harvesting 110 or cutting at least a portion of a tree. In figure 7 a tree 135m is only cut with means for cutting 116. In various example embodiments the cut tree may be with or without delimbing. The decision which tree to cut may depend on several factors. It may depend on tree parameters and/or growing conditions for tree 135k and/or 135l. Those tree may have a specific quality which may have been detected by tree parameters and/or growing condition, which specific quality one wants to improve. The improvement may be achieved by cutting tree 135m with means for cutting 116. With tree 135 removed the economical growth value and/or growth potential of tree 135k and/or 135l may be increased.

Tree 135k and/or 135l may have an increased growth potential after tree 135m has been removed just because tree 135m was too close to tree 135k and/or 135l.

In another example embodiment tree 135m is cut because tree 135m has at least one tree parameter and/or growing condition which may be inferior, for instance tree 135 may be storm damaged and is cut for fertilizing and/or give more sunlight, water and nutrition to the remaining trees 135k and/or 135l. In the depicted example embodiment in figure 7 the tree is cut without being taken care of. It may be economically advantageous to fertilize remining trees with trees of low value. Cutting trees without taking care of them may also depend on nature conservation goals or to fulfil environmental certification where some trees must be left on ground for favouring other living species.

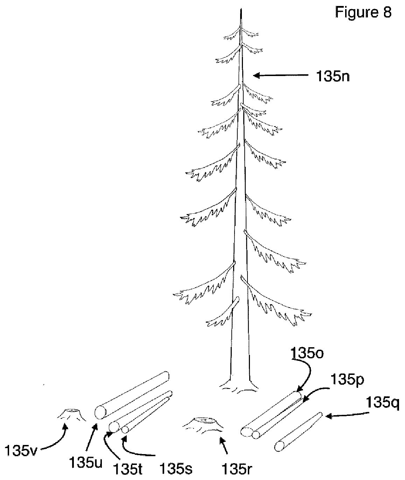

Figure 8 depicts tree tree, whereof one 135n is not harvested while the other two has been cut down and cut in portions. The three tree may have different tree parameters and/or growing conditions, which may have determined which of the tree to be cut down and how the tree is cut in portions. Tree 135o, 135p, 135q and remaining tree 135r are portions of a first harvested tree. Tree 135s, 135t, 135u and remaining tree 135v are portions of a second harvested tree. The different portions of said first and second harvested tree may have different tree parameters, i.e., different portions of a single tree may have varying tree parameters. Said first and second harvested tree may have been harvested by a UAV and/or by a land going harvesting equipment. If said first and second harvested tree has been harvested by an UAV, it may be advantageous to leave said first and second harvested tree on the ground as an intermediate storage location for later transportation to another location when it is more logistically advantageous. The reason for not transporting away a tree from its original location immediately after having cut it down may depend on limited storage capacity at a nearby forest road. Harvesting can either be made with UAV and/or land based harvesting machines. Tree parameters may be detected during harvesting by means attached to the UAV and/or the land based harvesting machine. For instance, when tree 135p is harvested it may give indirect information about weight and other tree parameters of tree 135o and/or tree 135q. Tree parameters of for instance a top scrap portion of a tree may determine if the remaining portion of the tree should be transported when harvested or be cut and stored at its original location for transportation at later point in time. Annual rings in 135r may be detected with a camera and give information about tree parameters for the other portions 135o, 135p, 135q.

In various example embodiments tree parameters and/or growing condition for tree 135n may give indication of the quality of tree 135o, 135p, 135q, 135s, 135t, 135u. Tree parameters and/or growing condition from tree 135n may determine the priority of harvesting and/or the order of transportation and/or the final destination for tree 135o, 135p, 135q, 135s, 135t, 135u.

In various example embodiments information about tree parameter and/or growing condition for tree 135o, 135p, 135q, 135s, 135t, 135u may be stored digitally during harvesting. Such digitally stored information may not be visible on the harvested portions 135o, 135p, 135q, 135s, 135t, 135u, but may be stored together with coordinates in three dimensions. The digitally stored information may determine which quality the different portion may have and when, in time, said different portion shall be transported. In various example embodiments harvesting and transportation may be made at different times due to ground condition, wet, snow etc or other temporary weather conditions.

Information about tree parameters and/or growing condition which is detected during harvesting may be performed by a land-based machine and/or a UAV, may be used for determining the number of UAV needed for lifting the tree portions 135o, 135p, 135q, 135s, 135t, 135u.

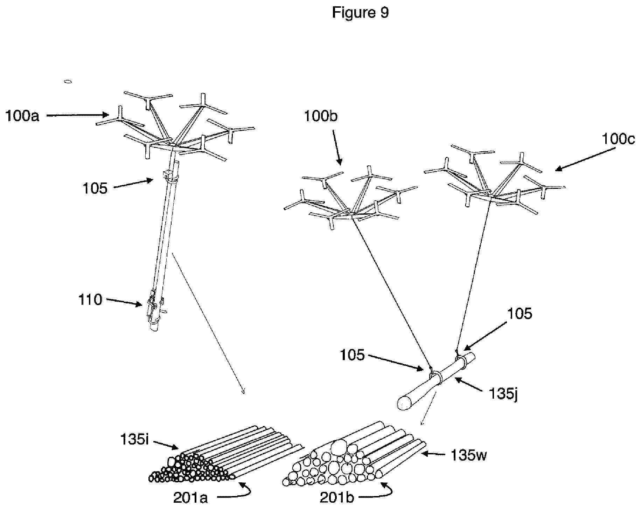

Figure 9 depicts transportation of tree with at least one UAV to different storage locations 201a, 201b. Storage location 201a has a first tree quality (first set of tree parameters and/or growing conditions) and storage location 201b has a second tree quality (second set of tree parameters and/or growing conditions). A weight of a specific portion of a tree may be estimated based on information about a tree average diameter length and volume.

The UAV 100a may have harvested tree in pile 135i at location 201a. Tree in pile 135i at location 201b may have lower weight than tree in pile 135w. Ligo in pile 135w may require two UAV, 110b, 110c, for transportation of each individual tree due to its weight.

The UAV 100b has a first means 105 for holding the tree 135j and said UAV 100c has a second means 105 for holding the same tree 135j. As indicated in figure 9, attachment point for holding means 105 for UAV 100b is different than attachment point for holding means 105 for UAV 100c. Based on tree parameters and/or growing condition a location for storage of different portions of tree is determined. Different number of UAV may be necessary for lifting different tree depending on tree weight, max lifting capacity for UAV may determine the number of UAV necessary for transportation.

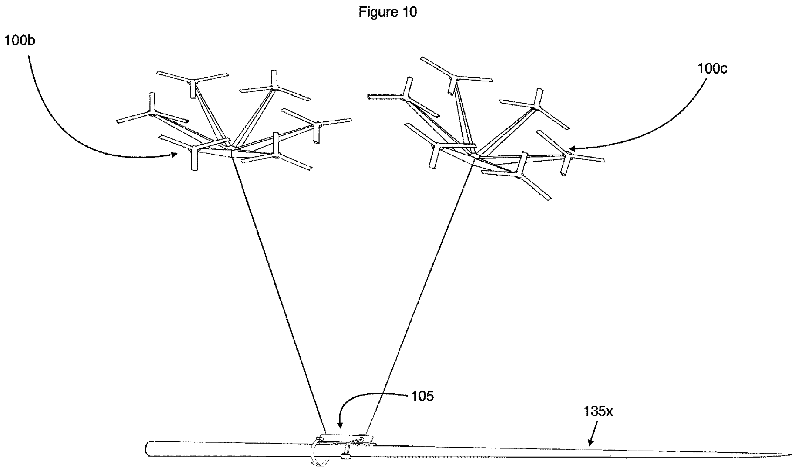

Two or more UAV 100b, 100c may, as depicted in figure 10, use a common means for holding 105 the tree 135x and transporting said tree 135x in synchronism to a final destination. Using a common means for holding the tree may increase the load capacity.

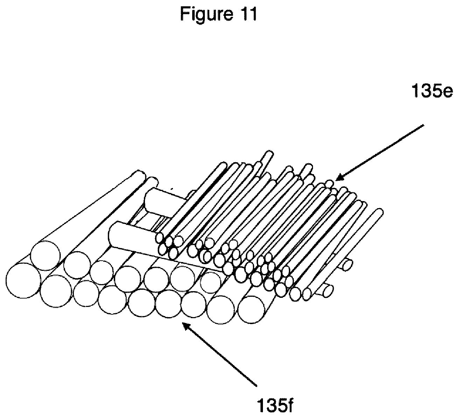

Figure 11 depicts tree of different quality stored at a common destination. Tree 135e and tree 135f have different tree parameters, in this case diameter, volume and weight is different, meaning that tree 135e has a lower value than tree 135f. In figure 11 tree 135e is on top of tree 135f, meaning that tree 135e was arrived earlier to the common destination than tree 135e. Tree parameters has in this case determined that higher value tree 135f has arrived earlier to the common destination than the lower value tree 135e. Although a common destination is used for different value tree and no marking has been made further transportation of the different tree types 135e, 135f may be easily separated due to its evident difference in size and shape. The common destination may not only be tagged with longitude and latitude but also its spatial location, height, in the pile. Transportation from the common destination may be made in different time slots so that different transportation means may select the correct tree for further transportation. Storing different types of tree spatially differently at a common destination may be advantageous logistically due to the fact that different quality of tree may have different final destinations.

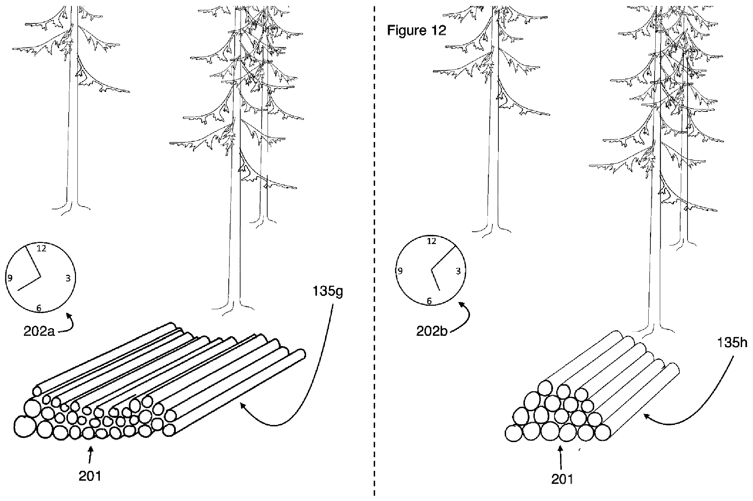

Figure 12 depicts that different classes of quality of tree may be transported to the same location but at different points in time during a day. Tree 135h of a first mix of tree parameters and/or growing condition is transported to common destination 201 at a first time 202b. tree 135h is picked up for further transportation before tree of a second mix of tree parameters and/or growing condition arrives at said common destination 201. Tree 135g arrives at time 202a, which is later than 202b. Using a common destination may be necessary when space is limited.

A certain point in time may be a specific time, a specific time range, between time A and time B, after time B or before time A. A certain point in time may be before or after a specific occasion or that specific requirements are fulfilled. It can also mean that specific tree, based on tree parameters and/or growing condition may be transported, cut, harvested and/or left at a final destination when specific requirements are fulfilled. It may also mean that specific command, functions or the like is activated and when such commands or functions are activated, transportation, cutting, harvesting and/or drop of tree at a final destination is started based on tree parameters and/or growing condition in a specific order. It may also mean when specific requirements are fulfilled transportation is always or never started for a specific tree parameter and/or growing condition. Tree may mean at least a portion of a tree, bush, or other wood-like species such as bamboo. A tree may be cut with or without delimbing.

A certain point in time may be the moment when directing a UAV to a predetermined destination for harvesting, transportation and/or cutting and/or delivery of tree at a predetermined location. Harvesting, transportation, cutting and/or leaving functions as a trigger for setting a speed and/or acceleration of a UAV with or without load in a predetermined direction to a predetermined destination. A certain point in time may be when a predetermined capacity per hour is reached, e.g., a predetermined harvested amount per hour is reached, a predetermined amount of tree per hour is transported and/or a predetermined amount of tree per hour is cut. Said capacity and/or speed may be controlled or optimized based on weather condition, detected tree parameter, detected growing condition, transporting distance, power consumption and/or logistic prerequisites. A certain point in time may be a capacity such as a cut area or length per second, or number of cut trees, it can be mean, median or fastest or slowest.

A certain point in time may be, for both selection of a tree and selection of a final destination, at which time different portions of a tree is to be transported, harvested, cut and/or delivered.

A certain point in time may be a targeted point in time and/or an estimated/predicted (based on simulations) point in time. A targeted point in time may mean that transportation, harvesting, cutting and/or delivering is intended to happen a certain point in time. An estimated/predicted point in time may mean that transportation, harvesting, cutting and/or delivering is expected to happen a certain point in time.

A final destination may be a place or position where the tree is expected to be delivered. The final destination may be a position in air where the tree is dropped from the UAV to the ground.

In various example embodiments the UAV is configured with aerodynamic means, comprising rotors, fans, wings, or equivalent combination, interacting with the air so as to be capable to precisely control the UAV position, velocity, orientation and/or angular velocity.

A tree trunk may have a length above 2m and/or a diameter larger than 10cm and/or a weight larger than 10kg. I various example embodiments the weight of the tree trunk is larger than 50kg. In various example embodiments the weight of the tree trunk is larger than 100kg. In various example embodiments the length of the tree trunk is larger than 3m. In various example embodiments the diameter of the tree trunk is larger than 20cm. In various example embodiments the diameter of the tree trunk is larger than 30cm.

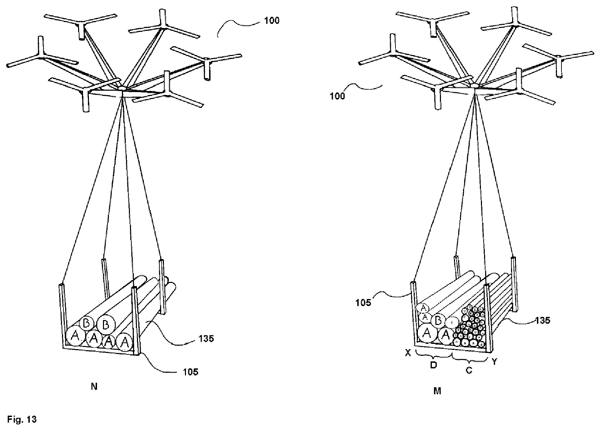

Figure 13 depict an example embodiment of a means for holding 105 directly and/or indirectly onto at least a portion of a tree trunk 135. In figure 13 a plurality of tree trunks 135 are held by said means for holding 105. Tree trunks 135 denoted with A are directly in contact with the means for holding 105 whereas tree trunks 135 denoted with B are only indirectly in contact with the means for holding 105. Tree trunks B are held by tree trunks A. Tree trunks B are only touching tree trunks A whereas tree trunks A are touching the means for holding 105 and tree trunks B. Heterogenous tree trunks may be arranged for optimizing, weight distribution and/or load capacity. Stacking of tree trunks in the means of holding 105 in figure 13 may be based on tree parameters and/or growing condition. The stacking of tree trunks 135 in means for holding 105 may also be based on the final destination of the individual tree trunks 135, i.e., tree trunks 135 to be delivered first on top of the stack and tree trunks 135 to be delivered later further down in the stack of tree trunks 135. Said means for holding may have a first type of tree trunks and/or tree trunks to be delivered a first point in time to the left in said means for holding 105 and a second type of tree trunks and/or tree trunks to be delivered a second point in time to the right in said means for holding. The means for holding may together with stacked tree trunks form a new type of means for holding.

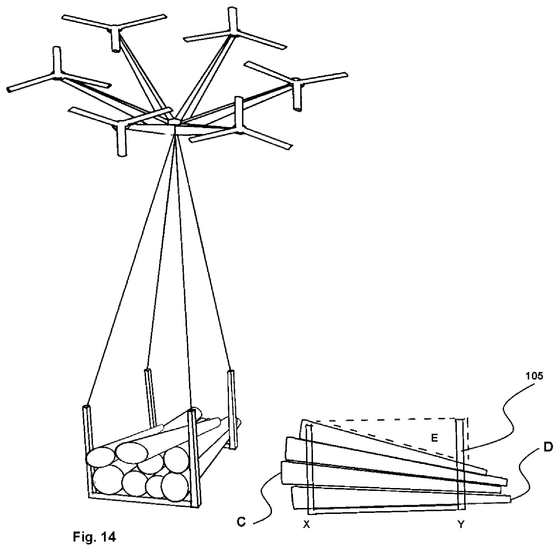

Figure 14 depicts an example embodiment of a non-optimal stacking of tree trunks. In figure 14 the load of tree trunks is heavily skewed. Tree trunks with its large diameter C are all arranged to the same end X of the means for holding 105 whereas the smaller diameter D are arranged to the other end Y. This skewed stacking may not only result in a non-optimal weight distribution but also in a non-used load capacity volume E.

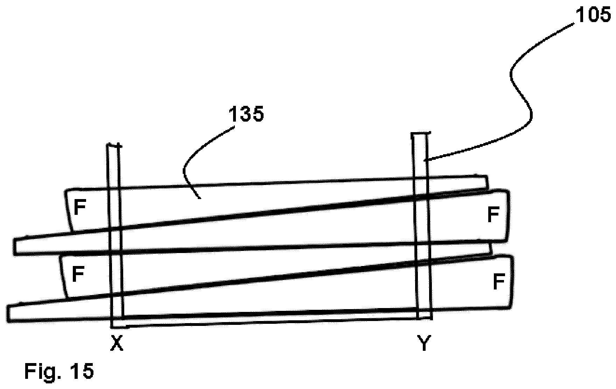

Figure 15 depicts a more efficient stacking of tree trunks 135. Here every other tree trunk is having the large end F to a first end X and second end Y of the holding means 105. Tree parameters and/or growing conditions may be used for optimizing the stacking for achieving a desired weight distribution and/or load of tree trunks 135.

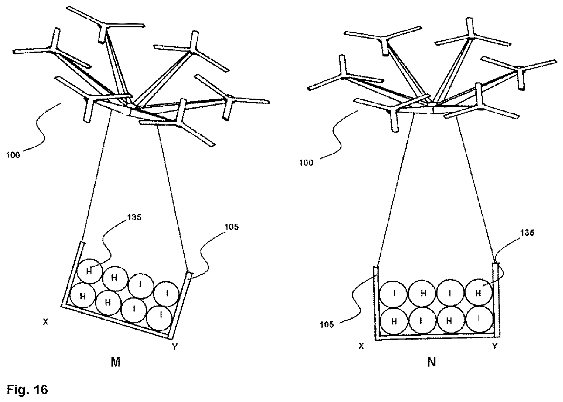

Figure 16 depicts an example embodiment of stacking of tree trunks 135 having essentially homogenous shape but of different density. In case of stacking the means for holding 105 with high density tree trunks I towards Y and low density tree trunks H towards X, said means for holding 105 will tilt in a clockwise direction due to the uneven weight distribution, see figure 16M. Taking into account tree parameters and/or growing condition a more efficient stacking may be achieved with a desired weight distribution by mixing the position of high and low density trees 135 in the means for holding 135, se figure 16N.

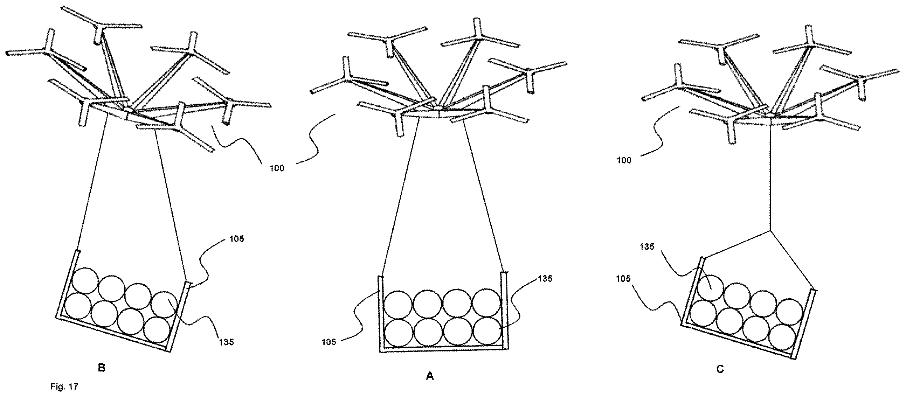

Figure 17a-c depicts three different load scenarios. In figure 17a there is an even weight distribution of tree trunks 135resulting in a means for holding 105 in an essentially horizontal direction with respect to ground. In figure 17b there is an uneven weight distribution of tree trunks 135 and due to the type of attachment of the UAV 100 to the means for holding 105, both UAV and the means for holding 105 are tilted out of an horizonal plane. In figure 17b the attachment means between the UAV 100 and means for holding 105 are provided on the outskirts of the means for holding 105 and out of a center of gravity of said UAV. The attachment means may be in the form of metal wires, metal rods, ropes or similar means. In figure 17c the weight distribution of tree trunks 135 is uneven and due to the attachment of the means for holding 105 to a centre of gravity of said UAV 100, the UAV 100 may remain untilted while the means for holding 105 may be tilted.

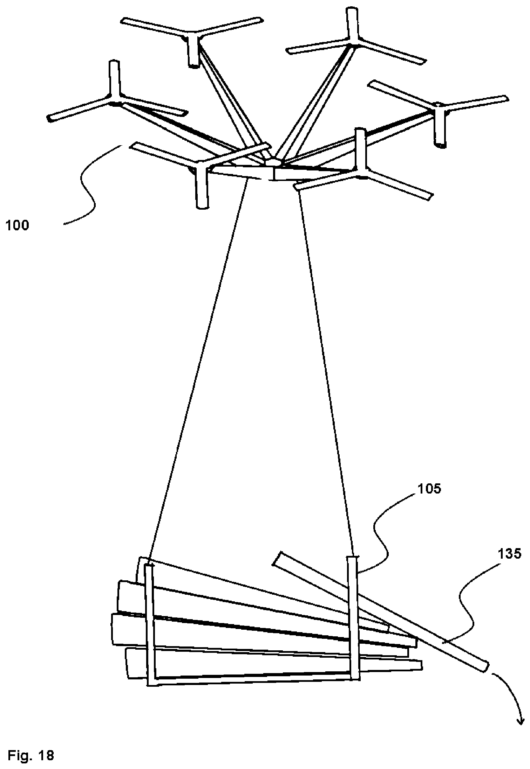

Figure 18 depicts a possible scenario with a tilted means for holding 105 where tree trunks 135 in said means for holding 105 risking to drop from the means for holding 105 due to its tilted position. Tree trunks 135 may drop from the means of holding 105 in windy transportation conditions or slippery tree trunks 135.

The load capacity may be alterable due to the weight of the tree trunks. A first support member and a second support member may be rotatable with respect to each other around a rotation point. The first support member may be attached with its top end to the UAV 100 and the second support member may be attached with its top end to the UAV 100. When the volume of the load and/or the weight of the load in said means for holding varies the load capacity may vary within a predetermined load range.

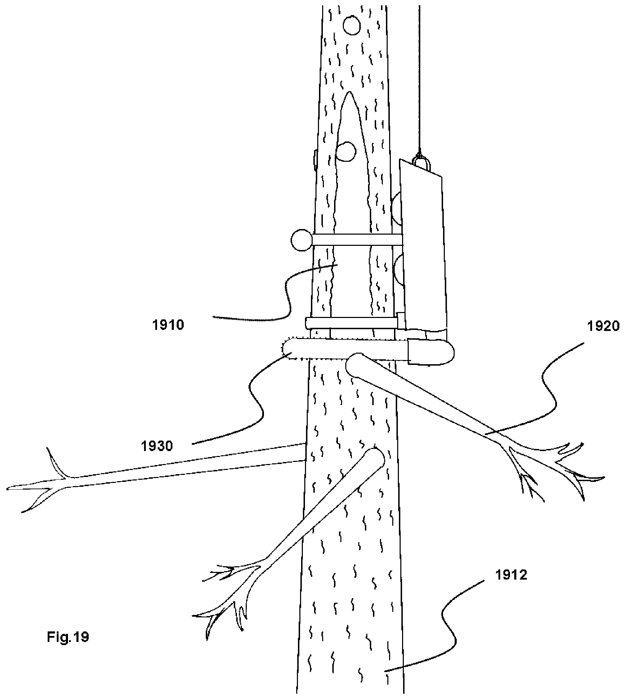

Figure 19 depicts a means for cutting 1930 delimbing and debarking a tree which has a hollow inner portion 1910 which may be caused by insect infestation, fungis, age or similar. By debarking a tree not only the tree will die but also most likely the insects causing the insect infestation. Means for delimbing and means for debarking may be one and the same tool or different tools.

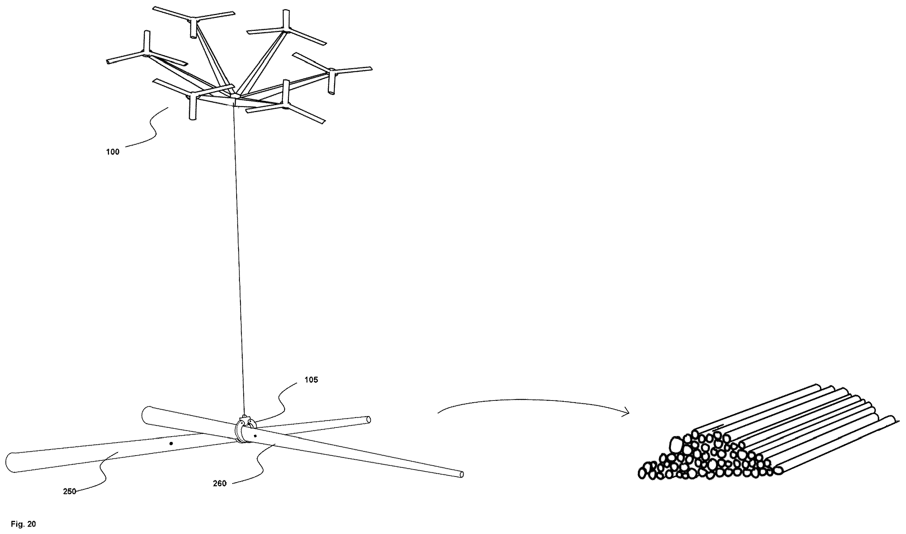

Figure 20 depicts a possible scenario with a single holding means 105 holding two tree trunks 250, 260. Here the tree trunks are non-parallel with each other causing a relatively high air resistance. The relatively sprawling load of tree trunks 150, 260 may be a result of a single holding position of said means for holding in combination with a lifting said tree trunks 150, 260 out of their own and/or combined centre of gravity.

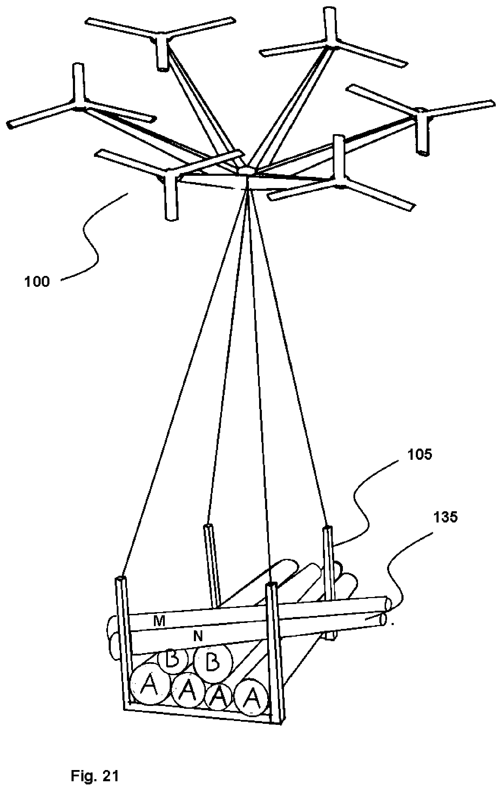

Figure 21 depicts a possible scenario with a fixed volume holding means 105 and a plurality of tree trunks 135 as a load. With tree trunks 135 arranged irregularly in the means for holding 105 may cause transportation difficulties due to a risk of irregularly tree trunks being jammed in other trees in the forest. Another problem with an irregular arranged load of tree trunks is the larger air resistance it may create which may increases the risk of drop of tree trunk(s) in heavy winds and/or unstable transportation. In figure 21 tree trunks A and B are provided in said means for holding 105 in such a way that any tree trunks protruding from said means of holding 105 is taking place in a predetermined direction. However, tree trunks M and N are provided in said means for holding 105 in an irregular manner with respect to tree trunks A and B and any protruding of tree trunks M and N may take place in any direction. Tree trunks M and N may risk to drop of said means of holding 105 in case of said means of holding and/or said tree trunks M and/or N are touching any object during its transportation or if there is a windy condition during transportation.

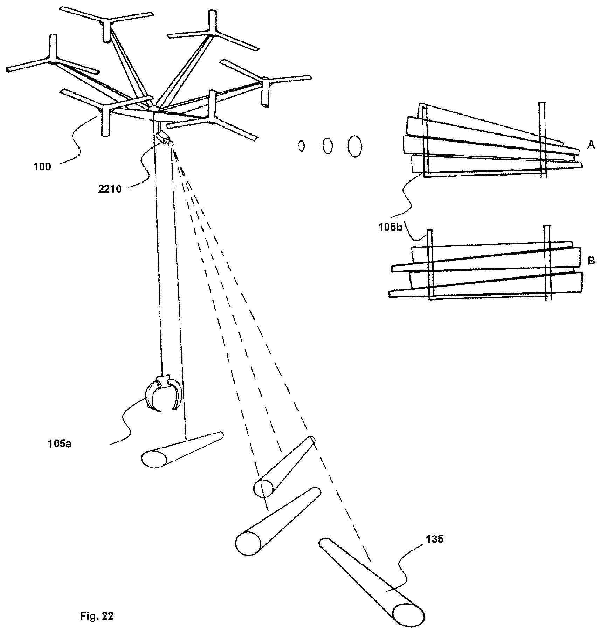

Figure 22A depicts a load of tree trunks with an uneven weight distribution. This may be created by arranging all of the tree trunks with its large end diameter in the same direction in said means of holding 105. Figure 22B depicts a load of tree trunks with an even weight distribution. This may be created by arranging some of the tree trunks with its large end diameter in a first direction and the remaining tree trunks with its smaller diameter in the same direction. The arrangement of tree trunks may be planned by using tree parameters and/or growing conditions of the tree trunk(s). A camera 2210 provided on said UAV 100 may for instance be used for determining how to grip a first tree trunk 135 so that its geometry in known already before the gripping moment. Any information of how said first tree trunk is held by holding means 105 attached to said UAB 100 may later be used for providing said tree trunks another holding means and or gripping a second tree trunk with the same holding means as holding said first tree trunk for creating an even weight distribution of a combined load of said first and second tree trunks.

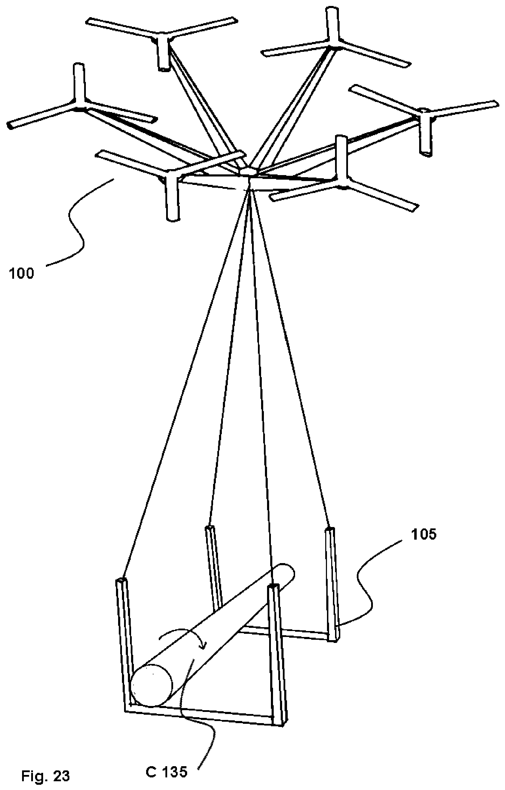

Figure 23 depicts a single tree trunk C 135 in a means of holding 105. Due to the size of the means for holding 105 and the size of the tree trunk C 135, said tree trunk C 135 may during transportation vary its position and cause an unstable transportation. This problem may be remedied by transporting a plurality of tree trunks which may secure each other in the means for holding 105.

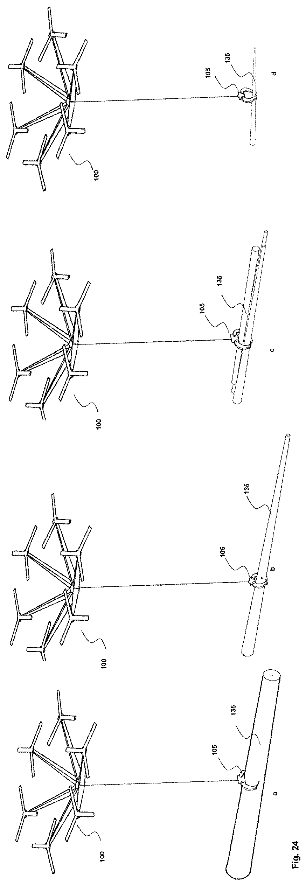

Figure 24a depicts a means for holding 105 being too small for the diameter of the tree trunk 135. The means for holding 105 does not enfold the full diameter of the tree trunk 135 which may increase the risk of drop of tree trunk 135 in a windy condition. In figure 24b the full diameter of the tree trunk 135 is enfolded by the means for holding 105. In figure 24c a plurality of tree trunks 135 are completely enfolded by the means for holding 105. In figure 24d the means for holding 105 is holding a tree trunk 135 having a much smaller diameter than the load capacity of said holding means 105. Said holding means may cut itself into the tree trunk 135 in figure 24a for increasing the lift capacity of said means for holding 105 and/or for further securing its load.

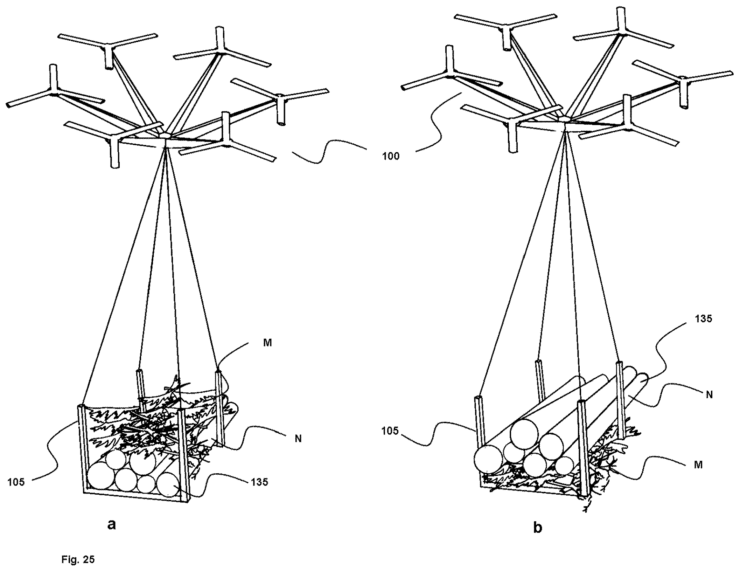

Figure 25a depicts a means for holding 105 having tree trunks 135 N at the bottom and twigs M on top of said tree trunks 135 N. Here the twigs M may risk falling out of said means for holding 105 whereas the tree trunks 135 N are relatively secured at the bottom of said means for holding 105. Figure 25b depicts a means for holding 105 having the twigs M in the bottom and the tree trunks 135 N on top of said twigs M. Here the tree trunks 135 N may risk rolling out of the means for holding 105 whereas the twigs M is secured at the bottom of the means for holding 105 by the weight of the tree trunks 135 N.

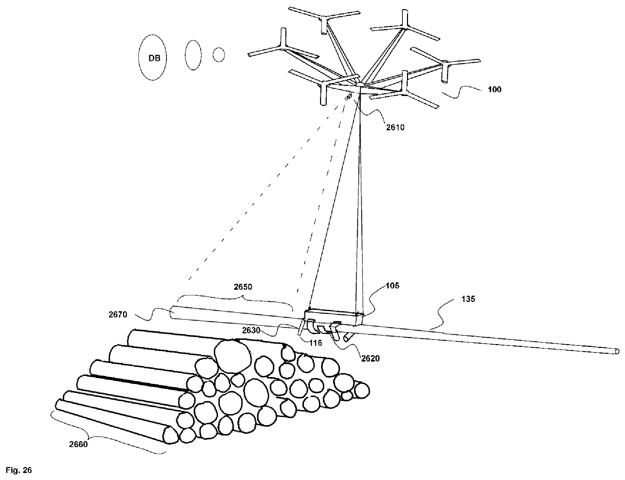

Figure 26 depicts a UAV 100 having attached to it a means for holding a tree trunk 105 and a means for cutting a tree trunk 2670. In figure 26 a holding position is denoted by 2620 and a cutting position is denoted by 2630. A tree trunk may be cut with a means for cutting 116 based on at least one tree parameter of at least one tree trunk in the pile of tree trunks 2660. One such tree parameter may be the length of the tree trunk. A tree trunk held by holding means 105 may be cut for producing a new tree trunk 2650 having the same length as the tree trunks in the pile of tree trunks 2660. A remaining tree trunk 2640 may further be cut by said means for cutting 116 for producing yet another tree trunk to said pile of tree trunks 2660 or being too short to be cut and maybe transported to another storage position. A camera 2610 provided on said UAV 100 may detect the length of the tree trunks in said pile of tree trunks 2660 and the length of the new tree trunk 2650. The cutting position may be determined by said camera 2610 and/or from a database.

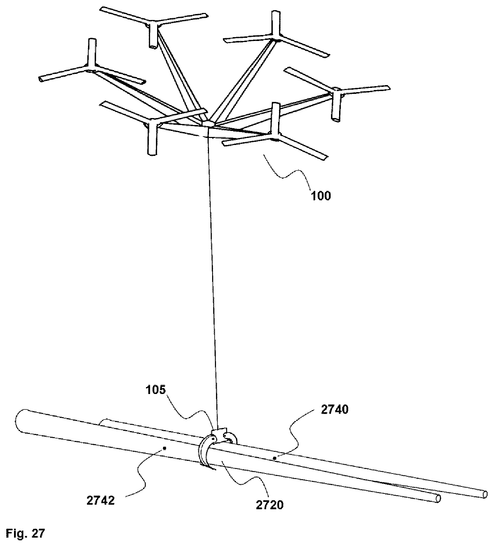

In figure 27 a UAV is provided with a means for holding 105. Said means for holding is here holding a first tree trunk 2740 and a second tree trunk 2742. The first tree trunk 2740 is having a center of gravity at a first position whereas the second tree trunk 2742 is having a centre of gravity at a second position. A combined centre of gravity of said first and second tree trunks may result in a holding position 2720 being positioned at a distance from a from the larger diameter of said second tree trunk 2742 and at a distance b from the smaller diameter of said second tree trunk 2742. The combined center of gravity position of said two tree trunks may when being held there result in a horizontal transport of said first and second tree trunks 2740 and 2742 respectively.

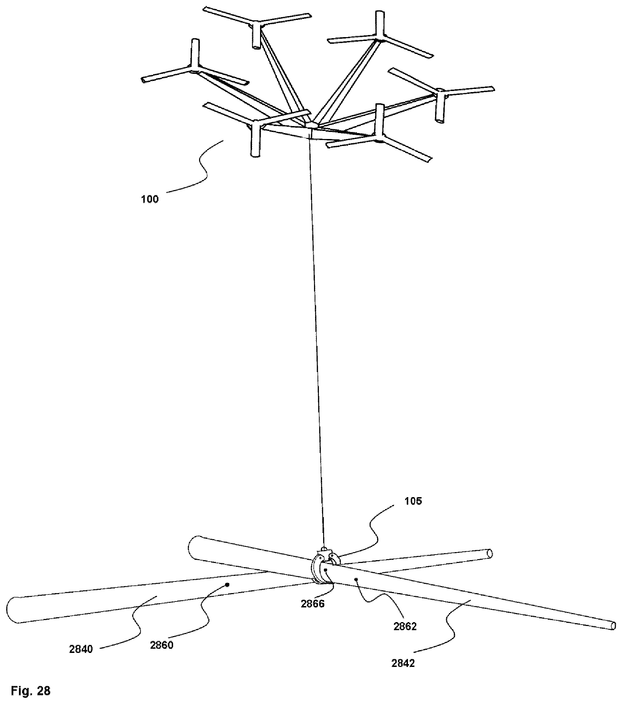

Figure 28 depicts a first tree trunk 2840 having a first centre of gravity 2860 and a second tree trunk 2842 having a second centre of gravity 2862. A combined centre of gravity 2866 may result in a sprawled tree trunk transportation which in most cases may not be optimal due to inter alia that the time for deposition of the tree trunks may be increased. However, the tree trunks may nevertheless be transported relatively safely using the depicted position.

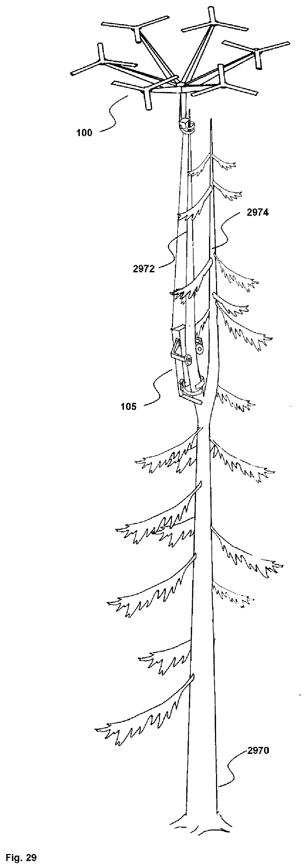

Figure 29 depicts a tree 2970 with a first tree top 2972 and a second tree top 2974. An UAV 100 with means for holding and/or means for cutting may cut off said first tree top 2972, said second tree top 2974 or both of them.

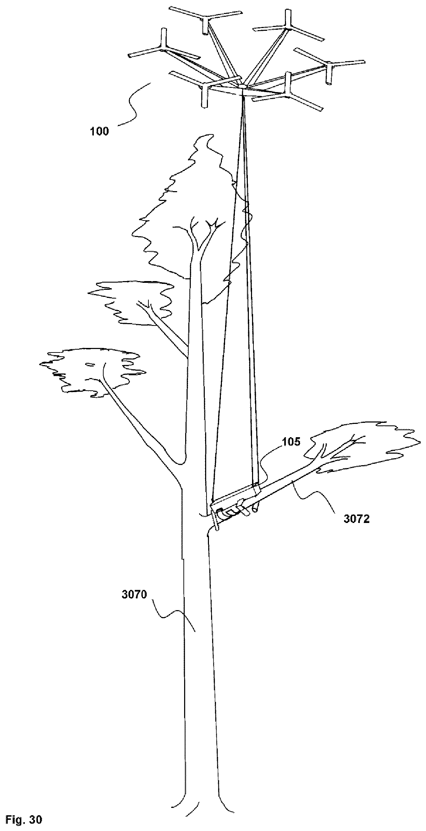

Figure 30 depicts an UAV 100 with means for holding 105 and/or means for cutting. Said means for cutting may cut off one or a plurality of twigs/branches 3072 from a tree 3070.

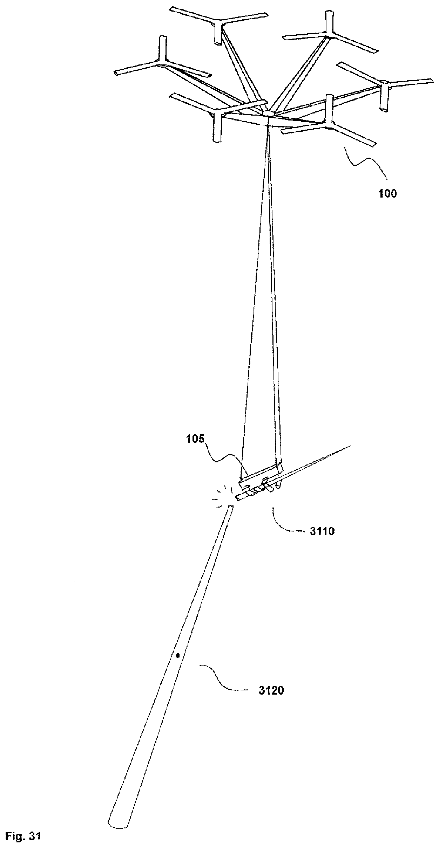

Figure 31 depicts an UAV 100 with holding means 105. Due to a different strength of a tree trunk at a top portion and a bottom portion a holding position may be selected for prohibiting any cracking of the tree trunk during transportation. A holding position too close to the top of the tree trunk may result in breaking the tree trunk in two pieces as shown when holding at a first position 3110 too close to the tree trunk top. A safe holding position 3120 may be provided from detected tree parameters and/or camera detection and/or indirectly from one or a plurality of growing conditions for said tree trunk for prohibiting any damage to the tree trunk during transportation.

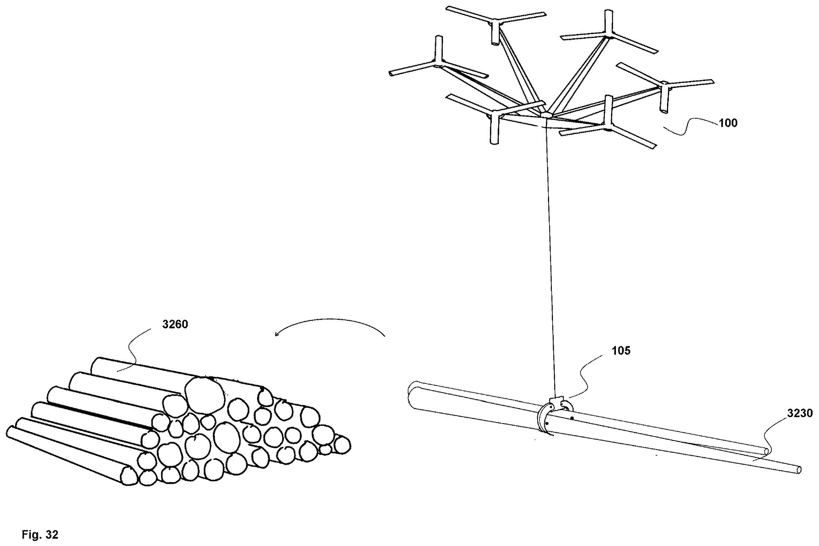

Figure 32 depicts an UAV 100 provided with a holding means 105. A tree trunk 3230 is held in a horizontal direction. Any deposition of tree trunks starting from a horizontal holding is more efficient than a tree trunk arriving at a final destination having any other direction. This may minimize the time it may take to deposit the tree trunk 3230 in the same manner as the previously deposited tree trunks 3260.

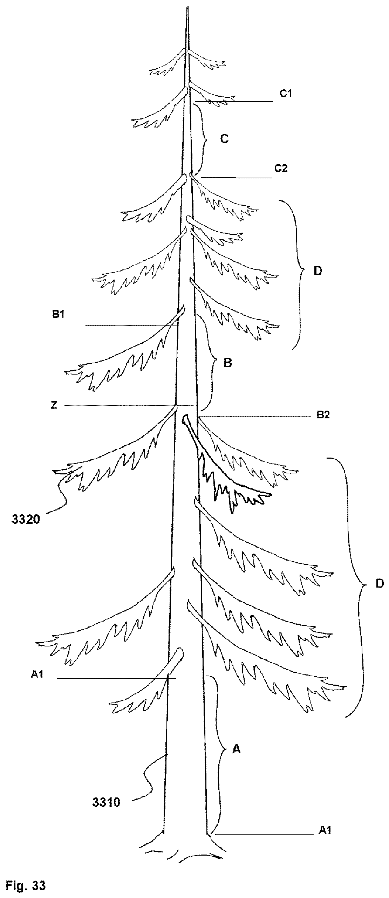

Figure 33 depicts a tree 3310 with numerous twigs/branches 3320. A suitable holding position for a means for holding may be where sufficient space between twigs/branches is present. In figure 33 3 suitable holding positions are denoted by A, Band C. At A, B and C the tree trunk is free from twigs/branches between A1-A2, B1-B2 and C1-C2 respectively. Non suitable holding position are denoted by D where there are difficult to reach the tree trunk because of twigs/branches.

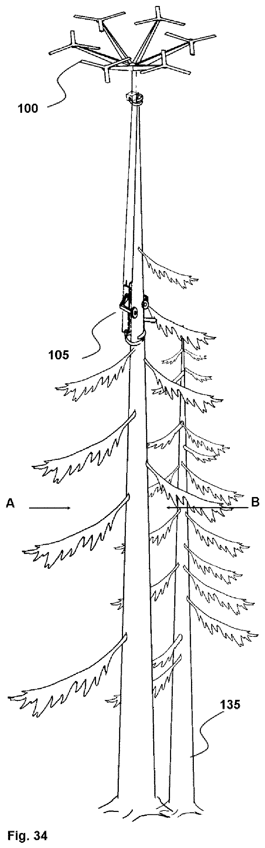

Figure 34 depicts a first and a second tree close to each other. Possible holding position in such case are not only limited by the location of twigs/branches of the tree to be held but also the position of the nearby tree and its twigs/branches.

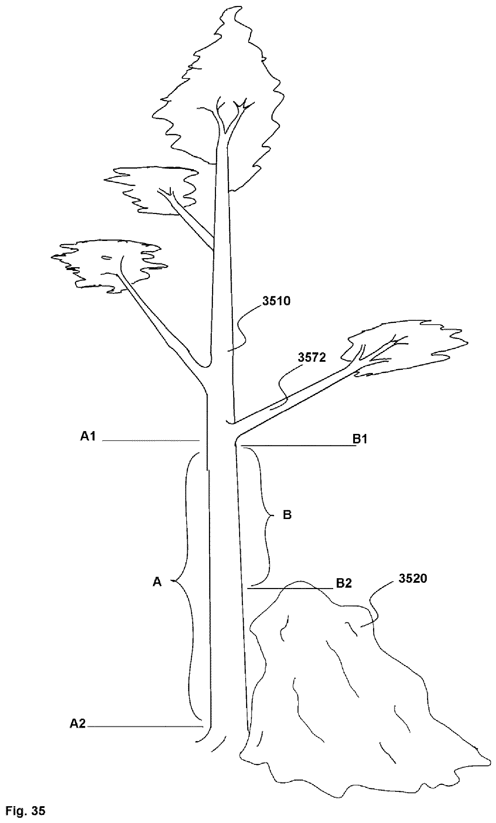

Figure 35 depicts a scenario where a tree 3510 is positioned close to a relatively large stone 3520. In such case the holding position is not only limited by the position of the twigs/branches of the tree but also the location of the stone in relation to the tree. Suitable holding positions are denoted by A and B. At A the tree trunk is free from twigs/branches between A1-A2. At B the tree trunk is free from twigs/branches between B1-B2. At B2 and further down to the ground the stone 3520 is the limiting factor for any holding position.

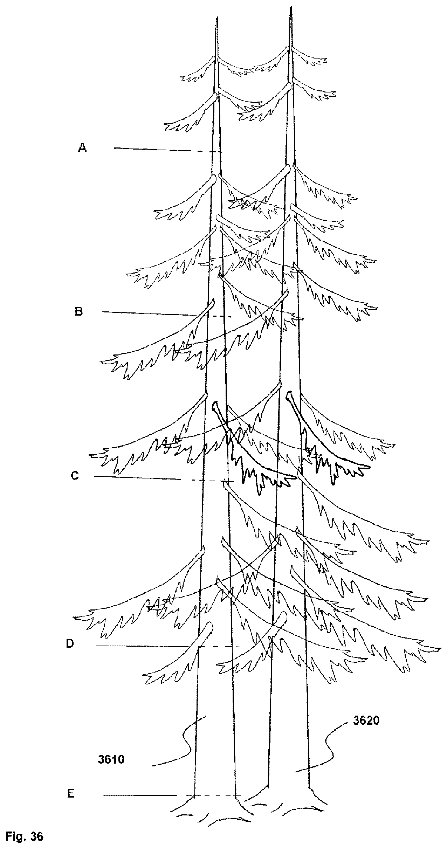

Figure 36 depicts a first tree 3610 and a second tree 3620. The second tree shall remain unharvested. The first tree 3610 shall be harvested in small portions with cutting positions A-E. The second tree shall remain unharvested due to its higher value/quality whereas the first tree 3610 shall be removed for further increasing the value of said second tree. The first tree may be cut in portions for minimizing the risk of damaging the second tree during harvesting. This may be the case in windy condition and during particular points of time of the year.

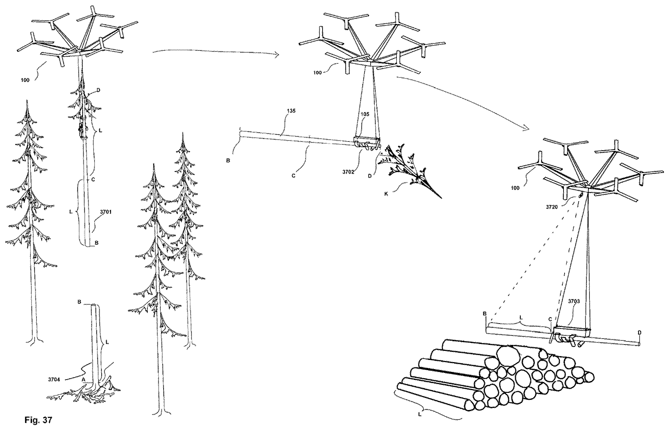

Figure 37 depicts different cutting scenarios during harvesting. A tree may be cut before transportation, during transportation or after transportation as shown in the top portion in the figure. A top portion of a tree may be harvested first. The top portion may be harvested at a position determined by the remaining length of the tree. In an example embodiment the remaining length of the tree after the top portion has been taken off may be twice a length of tree trunks provided at a final destination. The length may be detected by a camera or being provided from a data base. Any holding position of the tree may be altered during transportation or at the final destination enabling cutting the tree at predetermined positions. In figure 37 A-D denoted different cutting positions resulting in tree trunks having the same length L. 3701-3704 denoted different holding positions of different portions of the tree trunk.

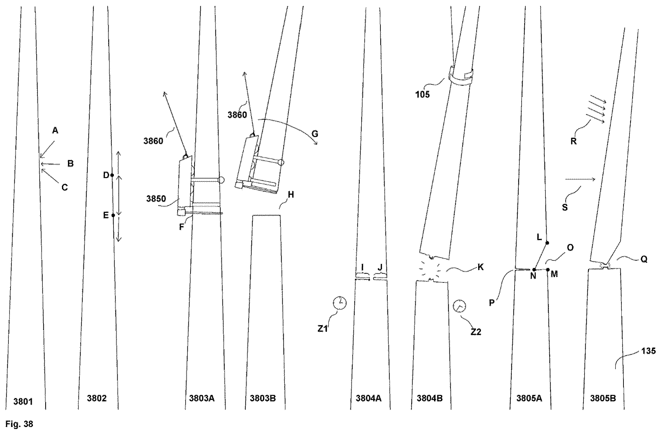

Figure 38 depicts different cutting scenarios. Tree trunk 3801 is illustrated to be cut at different angles with respect to the tree trunk. A cutting may be essentially perpendicular to the tree trunk as illustrated with B. A cutting may be angled with respect to the tree trunk as illustrated with A and C. Tree trunk 3802 illustrates that a cutting position may be at specific locations D, E or with in an interval D-E, or above a certain point D, or below a certain point E. Tree trunk 3803A illustrates a means for cutting and holding 3850 a tree trunk attached to said tree trunk 3803A. A cutting position is determined to be at F. Tree trunk 3803B is cut and has created a cutting area H.

A wire attached to the UAV, may force the cut portion of the tree trunk to rotate in a predetermined direction illustrated by G by reducing the length of said wire from said UAV to said cutting and holding means 3850. Tree trunk 3804A illustrates that a first partial cut I may be made at a first position and a second partial cut J may be made at a second position. Said first and second position may be positioned essentially at the same height of said tree trunk 3804A. Said first and second partial cut I and J respectively may be essentially in opposite to each. In various example embodiments more than 2 partial cuts may be made in order to destabilize a tree trunk, for instance 3, 4, 5 or more. A tree trunk 3804B may be separated by providing at least one means for holding 105 to said tree trunk. Said at least one means for holding is attached via a wire to at least one UAV. The UAV may crack the tree trunk 3804B by its drag force in horizontal and/or vertical direction. The partial cuts I, J may be made at a first point in time whereas the cracking by said UAV and said holding means 105 may be made at a second point in time. Said first and second point in time may be simultaneous or said second point in time may be second, minutes or days after said first point in time. Tree trunk 3805A illustrates an example embodiment of partial cuts with an intention to crack the tree in a predetermined direction by wind R or other external forces S. A first partial cut is denoted by P. A plurality of cuts may be made in order to remove a volume O of the tree trunk. Volume O may be removed by a first cut between L and N and a second cut between M and N. Alternatively volume O may be removed by a number of cuts M-N stopping at imaginary line N-L. Tree trunk 3805B is broken at Q by wind R or other external forces such as gravity, machine force and/or human or animal force.

A cutting position may be direct or indirect. A direct cutting position is determined by cutting the tree trunk by a means for cutting. An indirect cutting position may be determined by first cutting a tree and the part being cut off is further divided by its own weight during transportation or said cut off portion of the tree trunk may be divided into pieces when falling to ground. A cutting position may be selected taking into account tree parameters and/or growing conditions. A number of possible cutting position may be determined out of which a few may actually be used. A cutting position may be for removing a portion of a tree trunk. Alternatively, a cutting position may be a partial cutting where no part of the tree is removed, e.g., a cut less than half a diameter of the tree. A partial cut may be less than 1 cm into the tree trunk. A partial cut may be less than 3 cm into the tree trunk. A partial cut may be less than 10 cm into the tree trunk. A cutting position can be predetermined and it can change during cutting and/or during harvesting and/or transport etc. depending on growing conditions and/or tree parameters.

In various example embodiments said UAV and said means configured for harvesting at least a portion of a tree may be separated from each other end reconnected with each other. One or a plurality of cameras or other suitable position sensors may be used for the reconnection procedure.

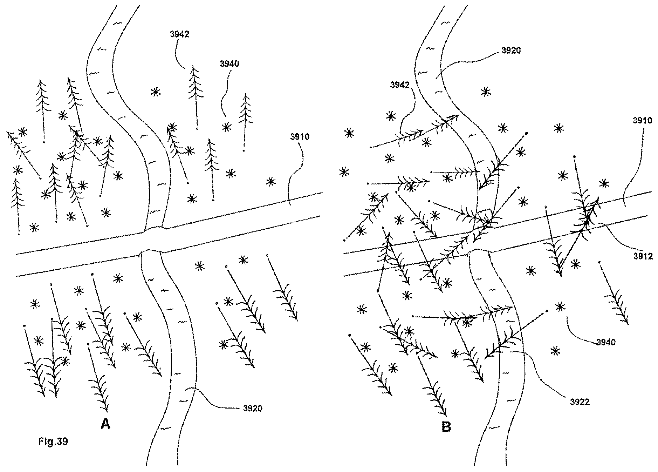

Figure 39A depicts a road 3910, a river 3920, trees laying on ground 3942 and stump or remaining portion of the tree 3940. As can be seen from figure 39A the trees laying on ground 3942 are not crossing the road 3910 and/or the river 3920. Trees laying on ground 3942 are also provided in essentially the same direction to the right of the road and essentially in the same direction to the left of the road, here a large diameter of the tree trunk is pointing in the direction towards the road 3910.

In figure 39B trees are provided in random directions and/or positions. In figure 39B Tree 3922 is crossing the river 3920 and tree 3912 is crossing the road 3910. Trees provided as in figure 39B will take more time and is more difficult to remove from its location compared to trees arranged as in figure 39A. Trees that are provided randomly on ground may be an obstacle for traffic on roads, make a forest more difficult to move around in for humans and/or animals. Transportation may also take longer time if trees are in partial or complete disorder instead if providing them on ground systematically in predetermined directions.

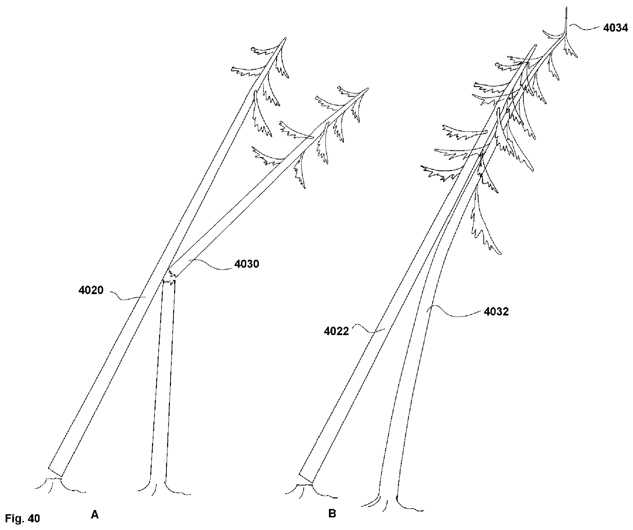

Figure 40A illustrates a first tree 4020 which is cut and hitting another nearby tree 4030 in its fall to ground. Said another tree 4030 may risk to be broken by the hit of said first tree 4020. This may be remedied by harvesting using at least one UAV which will hold the tree during cutting and prohibiting said tree to damage other trees. By using a UAV holding a tree during a cut may also reduce the pressure on the cutting tool during cutting. By providing a force by said UAV in an upward direction of the tree during cutting the weight of the tree onto the cutting tool may be reduced or eliminated reducing or eliminating said cutting tool to be stuck while cutting said tree. In windy conditions it may be necessary to cut from a predetermine direction in order to let the tree trunk fall in a predetermined direction and not get stuck in other trees in the vicinity. Trees being inclined and/or having an uneven weight distribution may be cut in order to let said inclination and/or uneven weight distribution determine the falling direction, the cutting position may be chosen in order to reinforce such tree parameter(s).

Figure 40B illustrates a first tree 4022 which has been cut intentionally or unintentionally and has been stuck during its fall a second tree 4032. The second tree 4032 is shown to be bent may the weight of the inclined first tree 4022. Leaving this first tree resting on said second tree a prolonged time, months, years, may reduce the value of the second tree. Said second tree may start to grow in a vertical direction 4034 inclined from the reminder of the tree 4032.

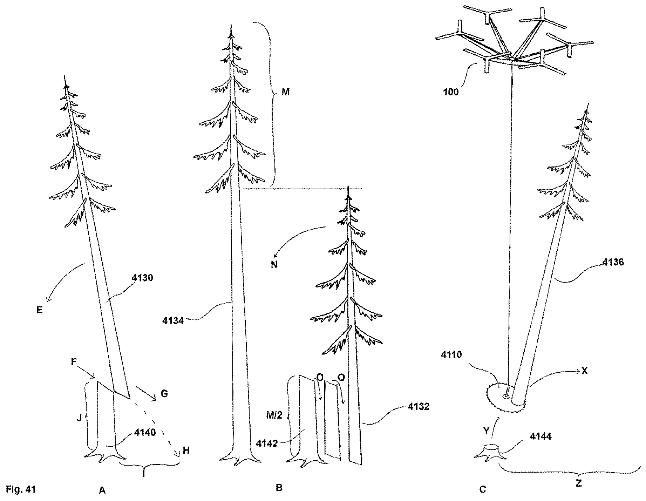

Figure 41A illustrates a tree 4130 which is cut with a non-perpendicular cutting area with respect to an axis parallel with the tree trunk. By cutting in direction F, tree 4130 may start to glide in direction G and fall in direction E. The cutting area of tree 4130 may follow hatched lined H during its fall and land at a distance I from the stump/remaining portion of the tree 4140. The height J of the stump/remaining portion of the tree 4010 is one determining factor for said distance I.

Fig 41 B illustrates a first tree 4134 and a second tree 4132, 4142.By cutting the second tree 4132 in sections M, M/2 it may be possible to reduce its length and prohibiting branches of said first tree 4134 to stuck in branches of said second tree 4132. By cutting said second tree 4132 in sections of M it may be possible to reduce its top position to be below the lowest branch of said first tree 4134 thereby allowing to fell said second tree 4132 in direction N without risking to get stuck in branches of said first tree 4134.

Fig 41C illustrates a method of cutting a tree using an UAV 100 and a means for cutting 4110. By accelerating the cutting in direction X during cutting it may be possible to throw/move a tree 4136 a distance Z from its stump 4144. This may be useful when trying to avoid any tree on a sensitive area in the Z region.

In various example embodiments a plurality of UAV is used for transporting a plurality of tree.

The means configured for harvesting at least a portion of a tree may optionally be capable for moving on ground. The movement may be with legs, wheels or other suitable moving means.

In various example embodiments of the present invention a digital transmitter may be attached to a tree for communication with a control unit and/or at least one UAV and/or at least one means for harvesting at least a portion of a tree. Said digital transmitter may not only send out the position of said tree it is attached to but also send out information about distance to neighbour tree, the terrain, the diameter of the tree, the final destination of a non-harvested tree and/or other quality parameters of the tree such as type and/or curved trunk. The digital transmitter may be attached to the tree by a UAV, land vehicle, robot or by a human. The digital transmitter function may also be implemented as a pure software digital recognition function by unique features of the tree such as tree rings, limb pattern or tree bark.

The digital transmitter may be used to determine which tree to be harvested, where to move the harvested tree in order to simplify transportation logistics. A digital transmitter may be used to move tree/timber of different quality to different locations by said UAV. A digital marking may be used to determine which UAV and/or means for harvesting at least a portion of a tree trunk to be used. The digital information may be used for using one or a plurality of UAV depending on the size of the tree to be harvested. The digital marking may be used for tree thinning. The digital marking may be used in combination with a remote harvesting planning and/or tree thinning process prior to the actual harvesting. With digital marking a map of tree in a predetermined area may be used for guiding the UAV to the correct tree to be harvested. The digital marking may also determine in which order the tree shall be harvested in order to reduce the harvesting time. The digital marking may be used to estimate a future harvesting time. The digital marking may be used to determine which type of tree there are in a particular area, the distance between tree in a particular area, the topography of the land where tree are to be harvested, the height of the tree, the quality of the tree, the form of the tree, the diameter of the tree. The digital marking may determine prior to harvesting of the tree shall be cut in portions. The digital marking may be used to mark the different portion of the harvested tree weight.

In various example embodiments of the present invention the quality of a harvested tree may be predicted by studying at least one intrinsic parameter i.e., tree parameter and/or at least one extrinsic parameter i.e., growing condition.

In various example embodiments of the present invention detected spectral properties and/or spatial structures of a portion of a tree may be used as input for detecting tree parameters and/or growing conditions of at least a portion of said tree. Spectral properties and spatial structures may be detected on a microscopic and/or macroscopic level.

In various example embodiments of the present invention detected spectral properties and/or spatial structures of a tree's surrounding environment within a pre-determined distance may be used as input for detecting tree parameters and/or growing conditions of a portion of a tree. Spectral properties and spatial structures may be detected on a microscopic and/or macroscopic level.

Shape of leaves or fir needles may be used as a tree parameter.

Spectral properties and/or spatial structures may be from a cut surface of a tree, a tree trunk, a tree branch, tree leaves/fir needles and/or a tree leaves/fir needles. It may also be the spectral properties and/or spatial structures of vegetation, species and/or the ground within a pre-determined distance from said tree. Spectral and/or spatial properties may be evaluated on pixel level.

In various example embodiments of the present invention spatial properties of the tree to be harvested and/or transported and/or the spectral properties and/or the spatial structure of the ground and/or surrounding may be used as input for determining the final destination of at least a portion of a tree and/or for determining if a portion of a tree is to be harvested. Spatial properties may be detected on a microscopic and/or macroscopic level. Spatial properties may be from a cut surface of a tree, a tree trunk, a tree branch and/or a tree leaves/fir needles. Spatial properties may be evaluated on pixel level.

The spatial properties of a tree may be used as an intrinsic parameter of a tree for predicting its quality. Various sensors may be used for determining temperature and/or humidity which in turn may be used for predicting the quality of the tree.

The length of a tree may be the cut portion laying on ground waiting for transportation. The length may be the total length above sea level. The length may be the total length above ground. The length may be the length of a particular tree in comparison with at least one other tree.

In various example embodiments a tree parameter may vary within a single tree (tree, bush). A tree parameter may also vary between tree of the same species. A tree parameter may also vary between tree of different species. A tree parameter may be the temperature of the tree. The temperature of the tree may be an indication about the health and thereby the quality of the tree.

A tree parameter may for instance be a chest heigh diameter of the tree trunk or a branch.

A tree parameter may be various types of tree deformations.

A tree parameter may be the number of branches and its location on a tree. A tree parameter may be the shape of the branches. A tree parameter may be the number of dry branches or a dry branch.

A tree parameter may be defects generated by weather, e.g., storm, fire, torrential rain, dry periods etc. In various example embodiments a particular type of tree may not be harvested within a predetermined time period after a rainy season such as birch.

A tree parameter may be a tree gene or a set of genes. Tree genes may be detected in a lab. Tree genes may also be present together with the position of the tree when sowing the tree.

A tree parameter may be the number of leaves or fir needles. The number of leaves or fir needles may be estimated by detecting a spectral density per unit area. A tree parameter may be achieved by measuring speed and/or movement of vibrations in a tree and/or by measuring the speed and sound of such vibrations through a tree.

A growing condition may be hydrology of a predetermined area. Hydrology may be presence of running water and/or soil moisture.

A growing condition may be climate and/or meteorological variables such as wind, humidity, air pressure, radiation etc. A growing condition may be the weather during a particular season, a depth of snow, average wind speed, sensitivity to storm damage. A temperature, fire and/or snow depth etc. during a particular time-period may be a determining factor to harvest or not and/or if special equipment is needed.

Abiotic factors such as soil quality may be a growing condition and a determining factor for tree parameter. Abiotic factors in combination with a detection of annual rings, the shape of the tree, surrounding vegetation may give a good indicator of the quality of a tree. Visual inspection of a tree in combination with historical weather data may give a strong indication of the quality /value of a tree.

A final destination of a tree may not only be determined in longitude and latitude but also in height above ground level or sea level. The height and/or spatial position in relation to other portions of trees, ground or other objects variable may be useful if different types of tree parameters is to be stored on the same location but being transported to yet another location at different times. The final destination may be a fixed position, a vehicle, but also a position in relation to another object, portion of the landscape and/or a predetermined area or volume. The knowledge about the spatial location of a particular tree parameter in a pile of tree trunks may be logistically advantageous.

A direction of felling a tree may not only be determined in longitude and latitude but also in height above ground level or sea level. The height and/or spatial position in relation to other portions of trees, ground or other objects variable may be useful if different types of tree parameters is to be stored on the same location but being transported to yet another location at different times. The direction of felling may be to a fixed position, a vehicle, but also a position in relation to another object, portion of the landscape and/or a predetermined area or volume. The knowledge about the spatial location of a particular tree parameter in a pile of tree trunks may be logistically advantageous.

A growing condition and/or a tree parameter may determine the final quality of wood such as flat bend, edge bend and/or skew.

In various example embodiments a tree may be cut in several portions and said portions may be laid on ground. One of the smallest portions may be transported first and based on at least one of its tree parameters the weight of the remaining portions may be estimated.

Cutting a portion of a tree or a number of full trees may be performed for increasing the value of the remaining portion of the forest.

A cutting position may be chosen in order to damage the tree but not removing any parts from the tree, i.e., one or several cuts may be applied onto said tree so that said tree may die within a predetermined time period. A cutting position may be chosen in order not to harvest the tree but in order to destabilize the tree so that the tree in a future windy condition may fall by itself. A cutting position may be chosen so that the tree may dry up during one or several season and attain a greater energy value and harvested later when its dryness is better, and therefore have a better value as a fuel. Leaving av tree trunk to rotten may also in some circumstances be advantageous for biological diversity. Damaging a tree intentionally ma also cause the tree to lose its leaves or needles. Pick up may take place after the tree has lost all its leaves or needles. This may be advantageous since lots of nutrition in said leaves/needles will return to the ground and feed other plants.

The cutting position may be chosen in order to remove a particular portion of a tree such as a portion of a tree trunk. The cutting position may be chosen in order to maximize the value of the harvested tree trunk. The cutting position may be chosen in order to increase the value of the remaining unharvested portion of the tree. The cutting position of a tree trunk may depend on at least one detected tree parameter and/or at least one detected growing condition of at least a portion of a tree. The cutting position may depend on the final customer and/or the specific use of the harvested trunk. The cutting position may depend on the lifting capacity of one or a plurality of UAV. The cutting position may depend on the distance from the original cutting location and the final destination of the harvested tree trunk. The cutting position may depend on the time of the year the tree is harvested. The cutting position may depend on the weather condition during harvesting. The cutting position may depend on a specific load capacity of a timber truck. The cutting position may depend on specific defects in a tree such as fungal infestation and insect infestation. The cutting position may be chosen in order to maximize the value of the trees in the vicinity of the cut tree.

In various example embodiments at least one remotely and/or autonomously controlled means for holding (105) at least a portion of a tree trunk is attachable to said UAV. The means for holding (105) may be used for holding onto the tree trunk while transport said tree trunk and/or holding onto the tree trunk while harvesting the tree and/or holding onto the tree while delimbing and/or debarking the tree. Holding may mean gripping the tree trunk or resting the tree trunk against said means for holding. In various example embodiments means configured for directing said means for holding at least a portion of a tree trunk to a particular position of said tree trunk depending on said at least one detected tree parameter and/or said at least one detected growing condition. The holding position may be dependent on the location of branches on said tree trunk, the balancing of the tree trunk while transporting it, the positioning of the tree trunk in sad means for holding for prohibiting damaging of surrounding trees/tree trunks, prohibiting movement of the tree trunk while debarking and/or delimbing and/or cutting and/or for a more efficient placement of said tree trunk at its final destination. The holding position may vary depending on the number of tree trunk hat are held by said means for holding (105). If holding a first tree trunk the holding position may be a first position, if gripping a second tree trunk, the first position of said first tree trunk may be altered due to the simultaneous holding of said first and second tree trunk in order to achieve a desired balance. The holding position may also be depending on the weather condition, if wind still a first tree trunk may have a first gripping position but in a windy condition said first tree trunk may have s second gripping position. A holding position may be determined by a future operation such a debarking, cutting, delimbing and/or transportation etc.

The holding position may be altered during the handling of the tree trunk. A first holding position may be during delimbing, a second holding position during debarking, a third holding position during cutting and a fourth holding position during transportation.

The holding position may also be chosen in order to minimize the damage to said tree trunk or other tree trunks.

The holding position and/or cutting position may also be dependent on surrounding parameters such as surrounding trees, terrain etc.

The holding and/or cutting position may also be dependent on its forthcoming position in a pile of tree trunks. The holding position may also depend on removing a tree trunk from a pile of tree trunks onto a truck.

The holding and/or cutting position may also be real time adaptable by means of a camera. The holding position may take into account the movement of a tree due to weather condition such as snow, wind etc.

The holding means (105) may be configured to move on ground and/or move up and/or down on a tree trunk. The holding means is attachable to said UAV. The holding means may reach a predetermined tree from ground or from air by a UAV. The holding means may be configured to climb the tree trunk. The holding means may be attachable to a delimbing tool. The delimbing tool may have delimbed the tree independently of the movement of said holding means. The holding means may be attachable to the UAV for transporting said at least a portion of the tree trunk away from its original location.

The holding means and/or cutting means may be one or a plurality of holding means. A plurality of holding means may be attachable to each other. A plurality of holding means may achieve a plurality of holding positions on one and the same tree trunk or different tree trunks. The plurality of holding means maybe connected to each other with a wire.

A coarse holding and/or cutting position may be made before reaching a predetermined tree. The coarse holding and/or cutting position may be updated with a more accurate holding position while at or near the predetermined tree by using a camera equipment. The more accurate holding/cutting position may be determined by a remote operator using the information form the camera equipment and/or automatically by using a library of prestored pictures of trees together with holding positions using artificial intelligence (Al).

Holding may include any form of gripping, resting, loading and/or carrying at least a portion of a tree trunk. Harvesting may be one or a plurality of sub-elements in a process of extracting at least a portion of a tree from a particular land area or the full process chain of extracting at least a portion of a tree from a particular area. Sub-elements may be delimbing, debarking, cutting, holding, detecting, transporting, reloading, storing, etc. Said sub-elements may take place at different points in time. A tree trunk may be directly held by a means for holding by holding directly at said tree trunk. A tree trunk may be in-directly held by a means for holding by holding a twig and/or a branch of said tree trunk. At least a portion of a tree trunk may indirectly or directly be held by a UAV at least once before, during and/or after harvesting.

In various example embodiments of the present invention a cutting position may be selected a certain point in time, where said cutting position and/or said certain point in time is depending on tree parameters and or growing conditions of said tree trunk or a tree trunk within a predetermined area of said tree trunk.

In various example embodiments of the present invention where said system may be directed to cut a certain point in time to direct a tree to fall or not to fall in a certain direction depending on tree parameters and/or growing conditions and/or on a certain point in time when said cut tree trunk is transported away from its original location by said UAV. At least a portion of a tree trunk may be cut and separated from the remainder of the tree a certain point in time. Pick up may be made at a certain later point in time. In various example embodiments of the present invention said means for cutting may be configured to cut at said selected cutting positions a certain point in time. Said cutting position(s) and/or said a certain point in time may be depending on tree parameter(s) and/or growing condition(s) on said cut tree trunk or said tree trunk within a predetermined distance from said cut tree trunk. A tree trunk may be directed to fell or not to fell in a certain direction a certain point in time depending on said selected cutting position and/or said cutting on said cutting position a certain point in time.

In various example embodiments selecting a cutting position and type of cut on a tree trunk to be cut may depend on the type of tree in order to allow said tree trunk to fell in a predetermined direction. In various example embodiments a tree trunk may be released and/or not to be released in a certain tree-felling direction a certain point in time. The at least one UAV may lift the tree during cutting. The UAV may force the tree to fall in a predetermined direction by initiating a flying direction towards the desired falling direction while attached to said tree trunk to be removed from the remainder of the tree.

The system may further comprise means configured for directing during cutting, by means of cutting, holding, with or without UAV, wind and/or other external forces at least a portion of a tree trunk to fall and/or not to fall in a certain direction. Said selected cutting position and/or said certain point in time may be depending on at least one detected tree parameter and/or at least one detected growing condition of a tree trunk. The system may further comprise means configured for directing said at least one remotely and/or autonomously controlled UAV with at least a portion of a tree trunk to a final destination a certain point in time where said final destination and/or said certain point in time is depending on at least one detected tree parameter and/or at least one detected growing condition of said transported portion of a tree and/or of a remaining portion of a tree and/or of at least one tree grown within a predetermined distance from said transported portion of a tree and/or at least one portion of a tree at said final destination. A certain type of cut, direction, size, shape, location may be selected out of at least one tree parameter and/or growing condition in order to allow said tree trunk to fall in a predetermined direction. Said means for cutting may apply one or a plurality of partial cuts a certain point in time in order to allow a tree trunk to be separated from the remainder of the tree a cerain point in time.

A cutting position and/or the type of cut of a tree trunk may be one parameter determining a falling direction of a tree trunk. The falling direction may be within a predetermined angular interval for instance 0-180°, 20-160°, 40-120°, 60-100°. A cutting position and/or the type of cut of a tree trunk may be one parameter determining a falling position of a cut tree trunk away from its original location. A tree trunk may be cut in order to fall onto a moving object or a stationary object such as a transport vehicle. The falling of a tree trunk may be with a certain speed, spin, rotation or movement. The tree trunk may glide, roll and/or blow towards a certain position. The ground may be a determining factor for the final position of a cut portion of a tree trunk, e.g., slope, terrain and season may affect the final position.

A predetermined direction may involve simulation beforehand taking into account tree parameters and growing conditions in order to predict and chose a cutting strategy fulfilling desired characteristics. A certain point in time may be within a predetermined time interval, after a predetermined time, before a predetermined time or at a specific time. A certain point in time may depend on other events, i.e., event B cannot start before event A has been finished or when after fulfilling one or several requiments in a harvesting or transporting chain or process, for instance reaching a tree or a predetermined time. A specific choice of felling a tree may be to reduce its total time, make as little damage to the nature, prohibiting the fell tree to be an abstacle for animals, insects, traffic and/or water passage. Harvesting may be made for increasing the value of the remainder of the forest, not blocking infra structure, not damaging and/or blocking the harvesting tools, minimize safety issues, reduce damage of the surrounding trees, ecosystem and/or infrastructure. Harvesting may also be performed for reducing damage of the harvested tree such as cracks. A selected cutting position may determine the value of the removed/separated tree trunk. The rotation speed of the cutting tool, the force and speed said cutting tool is forced towards said tree trunk may determine the value of the separated tree trunk. One or a plurality of UAV may during cutting force the tree trunk to be separated from the tree to fall in a predetermined direction. Said UAV may also assist in prohibiting said cutting tool to get stuck during cutting by lifting the tree trunk to be removed/separated or to have a certain speed when cutting, or a certain cutting position, or at a certain point in time when the wind moves in the right direction. A holding position may be a certain enfolding size which may vary depending on the particular harvesting moment. Transportation may require a particular holding position whereas delimbing or cutting may require other holding positions. A cutting of a tree trunk may be made at a certain point in time. A certain point in time may be a specific time during a day.A cutting of atree trunk may be made with a particular force and speed in a particular direction while holding the tree trunk to be removed with at least one holding means attachable to at least one UAV. The time for harvesting may be the actual cutting time for one or a plurality of tree trunks. The time for harvesting may be the total time it takes to transport the means for cutting from a start position to a first tree, cut said first tree, transport said means for cutting to at least one other tree, cut said other tree and transport said means for cutting to a final destination.

Holding may include any form of gripping, resting, loading and/or carrying at least a portion of a tree trunk. Harvesting may be one or a plurality of sub-elements in a process of extracting at least a portion of a tree from a particular land area or the full process chain of extracting at least a portion of a tree from a particular area. Sub-elements may be delimbing, debarking, cutting, holding, detecting, transporting, reloading, storing, etc. Said sub-elements may take place at different points in time. A tree trunk may be directly held by a means for holding by holding directly at said tree trunk. A tree trunk may be indirectly held by a means for holding by holding a twig and/or a branch of said tree trunk. At least a portion of a tree trunk may indirectly or directly be held by a UAV at least once before, during and/or after harvesting. Said means for holding may hold said tree trunk in a stationary position or said holding means may be configured to move up and/or down on said tree trunk.

In various example embodiments of the present invention a cutting position may be selected a certain point in time, where said cutting position and/or said certain point in time is depending on tree parameters and/or growing conditions of said at least a portion of a tree trunk or a tree trunk within a predetermined area of said tree trunk.

In various example embodiments of the present invention where said system may be directed to cut a certain point in time to direct a tree to fall or not to fall in a certain direction depending on tree parameters and/or growing conditions and/or on a certain point in time when said cut tree trunk is transported away from its original location by said UAV. At least a portion of a tree trunk may be cut and separated from the remainder of the tree a certain point in time. Pick up may be made at a certain later point in time. In various example embodiments of the present invention said means for cutting may be configured to cut at said selected cutting positions a certain point in time. Said cutting position(s) and/or said a certain point in time may be depending on tree parameter(s) and/or growing condition(s) on said cut tree trunk or said tree trunk within a predetermined distance from said cut tree trunk. A tree trunk may be directed to fell or not to fell in a certain direction a certain point in time depending on said selected cutting position and/or said cutting on said cutting position a certain point in time. The cutting may be made with a certain speed through a tree trunk. The speed may be the moving speed of the means for cutting. Alternatively said speed may be a rotational speed of a saw chain or saw blade.

In various example embodiments selecting a cutting position and type of cut on a tree trunk to be cut may depend on the type of tree in order to allow said tree trunk to fell in a predetermined direction. In various example embodiments a tree trunk may be released and/or not to be released in a certain tree-felling direction a certain point in time. The at least one UAV may lift the tree during cutting. The UAV may force the tree to fall in a predetermined direction by initiating a flying direction towards the desired falling direction while attached to said tree trunk to be removed from the remainder of the tree.

The system may further comprise means configured for directing during cutting, by means of cutting, holding, with or without UAV, wind and/or other external forces at least a portion of a tree trunk to fall and/or not to fall in a certain direction. Falling direction may depend on tree parameters and/or growing conditions. Said selected cutting position, cutting through, speed through and/or said certain point in time may be depending on at least one detected tree parameter and/or at least one detected growing condition of a tree trunk.

During transporting, cutting and/or harvesting delimbing may take place a certain point in time. Delimbing may be performed for increasing or decreasing the internal tension of the tree trunk which may be helpful in harvesting, transporting. Delimbing may be performed taking into account tree parameters and/or growing conditions. The system may further comprise means configured for directing said at least one remotely and/or autonomously controlled UAV with at least a portion of a tree trunk to a final destination a certain point in time where said final destination and/or said certain point in time is depending on at least one detected tree parameter and/or at least one detected growing condition of said transported portion of a tree and/or of a remaining portion of a tree and/or of at least one tree grown within a predetermined distance from said transported portion of a tree and/or at least one portion of a tree at said final destination. A certain type of cut, direction, size, shape, location may be selected out of at least one tree parameter and/or growing condition in order to allow said tree trunk to fall in a predetermined direction. Said means for cutting may apply one or a plurality of partial cuts a certain point in time in order to allow a tree trunk to be separated from the remainder of the tree a cerain point in time. A UAV may be configured to blow with at least one of its rotors forcing said tree trunk to fall in a predetermined direction. Blowing direction may take into account tree parameters and/or growing condition.

A cutting speed may be chosen so that the means for cutting will not get stuck during the cutting operation. An optimal cutting speed may vary depending on growing condition or tree condition. The cutting speed may vary depending on the type of tree, diameter, inclination, weather condition or the like. The UAV may lift the tree trunk while cutting to reduce or increase tension and/or pressure on the means for cutting and/or within a tree trunk when cutting and/or harvesting and/or harvesting. Tree parameter and/or growing condition may be used for determining a required lifting force and/or required number of drones for prohibiting said means for cutting to get stuck during cutting. A cutting position may be selected and/or said UAV and/or other external forces acting on said tree to be cut in order to increase or decrease required cutting force and/or cutting speed. A falling process can start while cutting or when a tree is prepared to be cut by changing the pressure and /or tension within the tree trunk. A change in pressure and/or tension within the tree trunk during cutting or before cutting. Wind blowing from at least one rotor of at least one UAV may be used for pushing or pulling a particular portion of a tree. At least one means for holding and/or at least one means for cutting may cut and/or hold taking at different position depending on tree parameters and/or growing conditions. A certain point in time may depend on tree parameters and/or growing conditions. A falling can also be a change in pressure and tension within the tree trunk.

A system and/or method for system (10) for remote and/or autonomous cutting, holding, harvesting, transporting etc., may be one or a plurality of systems and/or subsystems working together by sharing information and/or preparing a tree for each other. A first system and a second system may be synchronized with each other. Said systems may perform different steps on different locations, in different manners and/or at different points in time. At least one system may perform at least one step with a land based (stationary or movable) device. Said land-based device may be a land-based vehicle or a robot. A first system may at a first point in time detect at least one tree parameter and/or growing condition for at least one tree. A second system may use at least one of said tree parameter(s) and/or growing condition(s) detected by said first system at a second point in time. Said second point in time may be seconds, hours, days, months or years later. A first system may select at least a tree to cut. A second system may use a selection data about trees to be cut from said first system and perform said cutting with at least one means for cutting. Said cutting may be performed at a later time compared to said selection. A first system may select one or a plurality of trees to be transported at a certain point in time. A second system may perform said transport by at least one means for transporting by using the information from said first system. A first system may select and/or detect a holding position of at least a portion of a tree trunk and/or at least one cutting position of at least one tree trunk. A second system performs said holding and/or cutting at said selected and/or detected cutting position by means of at least one means for holding at least a portion of a tree trunk and/or at least one means for cutting at least a portion of a tree trunk respectively. A first system may generate information at a first point in time to be used in another system at a second point in time.

Systems that work together may have several system owners and/or system manufacturer. One or several systems can contribute to a step. For instance, one system may detect a tree and/or tree parameters and another system may detect growing conditions. A system may have detected tree parameters and/or growing conditions a number of years ago and saved the position in relation to said detected tree parameters and/or growing conditions. This saved information may be used at a later point in time to predict tree prameters. Growing conditions may be the same for several year but may dramatically change if a major part of a forest is cut. Information about growing condition may be saved in a data base and may be used later by one or a plurality of system as a base for one or a plurality of harvesting decisions.

Tree parameters and/or growing conditions may last or evolve over time. A tree having a tree parameter A year X may be predicted to have a tree parameter B year Y. Future tree parameters may be predicted with a certain probability. Environment, such as terrain and climate may change slowly whereas ecosystem and tree(s) evolve over time. Trees may disappear. A system may perform a first moment which is dependent on a second moment having been performed by a second system.

A system may be a system of several system dependent or independent of each other. One or a plurality of sub-systems may go active or inactive while another system is performing a particular event. One system may be a master to the other system members (servants). One system may direct another system. One system may be a reserve system to another system. A detection by a first system may be a confirmation of a previous detection by a second system. A system may be a system of systems. A system may perform sub-elements in a chain of events. A first system may detect growing conditions and/or tree parameters, a second system may detect the tree to be harvested, and a third system may direct the means for cutting to a particular tree. A system may act on lack on information from another system. A system may change the number of sub-system members over time due to various labour intense process steps. It may be advantageous to use only relevant subsystems for a particular task, i.e., one or a plurality of subsystems may be inactive. This may save battery time and/or process speed.

### Feasible modifications of the Invention

The invention is not limited only to the embodiments described above and shown in the drawings, which primarily have an illustrative and exemplifying purpose.

Thus, the equipment may be modified in all kinds of ways within the scope of the appended claims.

Harvesting may mean felling of tree and preparing them for transport away from its original location. Harvesting may include both thinning and clearfelling operations. Harvesting may be made depending on current demand for a particular tree parameter. Harvesting may be made depending on current available storage capacity. Harvesting may be made depending on season/temperature for maximizing a particular tree parameter. Harvesting may be made for maximizing the quality/growth potential of the remaining tree in a particular area. Harvesting may also be made for maintaining a forest having a diverse age. Harvesting may also be made for maintaining a forest of a particular species, age and/or composition. Harvesting may be made for maintaining cultural and/or aesthetic values.

For instance, the disclosed system may also transport already harvested tree or portions of tree laying on ground. A plurality of UAV may be used for removing a plurality of tree laying on ground to a final destination. A plurality of UAV working together in synchronism may take one or a plurality of tree or portions of tree at the same time. The selection of tree to be transported may be made depending on the total weight of the tree or portions of tree to be transported. The plurality of UAV may have a maximum load capacity and maximum range capacity. Tree or portions of tree may be selected depending on their location, weight, time and the current state of the UAV, i.e., remaining charge and/or fuel. Harvesting may include all steps from locating a tree to fell to transportation of said tree trunk to a final customer. Harvesting may mean any single step in a harvesting procedure such as cutting, delimbing, debarking, holding, transportation, identification etc. Harvesting may mean removing at least a portion if a tree trunk and transporting it for further use at another location, which another location typically is an end user far away from the original location of the tree trunk. Harvesting may be made by multiple tools. I first tool may be a debarking tool, a second tool may be a delimbing tool and a third tool may be a cutting tool. Said tools may be arranged on the tree trunk simultaneously or separately with a predetermined time interval.

The means for cutting may be released form an UAV onto a tree trunk which is not to be harvested. Said means for cutting may move downwards on said tree trunk and move to a particular tree on ground to be cut. In various example embodiments the means for cutting may be released on a first tree trunk not to be harvested. Said means for cutting may move directly from said first tree trunk to a second tree trunk, i.e., without any ground transportation.

In various example embodiments of the present invention at least a portion of a tree is removed and left on ground. Said portion can be anything from a branch, a top section to a full tree. Full tree may be removed without being taken care of, a so-called scrap tree. A scrap tree may have a relatively low value in comparison with other surrounding trees and/or for letting the remaining tree in a particular area to obtain the best possible growing conditions.

Throughout this specification and the claims which follows, unless the context requires otherwise, the word "comprise", and variations such as "comprises" or "comprising", will be understood to imply the inclusion of a stated integer or steps or group of integers or steps but not the exclusion of any other integer or step or group of integers or steps. Tree is the generic term for any bush or tree.

## Claims

1. A system (10) for remote and/or autonomous holding at least a portion of a harvested tree trunk and/or at least a portion of a tree trunk to be harvested and/or at least a portion of a tree trunk during harvesting and/or at least a portion of a tree trunk before, during and/or after transporting said at least a portion of a tree trunk, said system (10) comprising:
a. at least one remotely and/or autonomously controlled Unmanned Aerial Vehicle (100), UAV,
b. at least one means (105) for holding directly and/or indirectly onto at least a portion of a tree trunk, said at least one means (105) for holding being attachable to or integrated with said UAV,
c. at least one means for detecting at least a portion of a tree,
d. at least one means for detecting at least one tree parameter of at least a portion of a tree and/or at least one growing condition of at least a portion of a tree,
e. at least one base station (120) for communication with said UAV,
f. at least one means configured for directing said at least one means (105) for holding onto at least a portion of a tree trunk, where said holding is directly or indirectly onto at least a portion of a tree trunk, to a particular position of at least a portion of the tree trunk depending on said at least one detected tree parameter and/or said at least one detected growing condition of a tree and/or at least one means configured for directing at least a portion of a tree trunk to a particular position, where said particular position is directly or indirectly onto said at least one means for holding, depending on said at least one detected tree parameter and/or said at least one detected growing condition of a tree,
wherein said at least one means (105) for holding is configured to be transported by said at least one UAV to said at least a portion of a tree trunk to be held by said at least one means (105) for holding and/or said at least one means (105) for holding is configured to be transported by said at least one UAV away from said at least a portion of a tree trunk held by said means for holding and/or said at least one means (105) for holding is attached to said at least one UAV at least once when holding during transporting and/or harvesting said tree trunk.

2. The system according to claim 1, wherein said at least one means configured for directing said at least one means for holding and/or said at least one means configured for directing at least a portion of a tree trunk is remotely and/or autonomously controlled.

3. The system according to claim 1 or 2, wherein said system further comprising at least one means for delimbing, at least one means for debarking, at least one means for cutting and/or at least one means for harvesting.

4. The system according to claim 1, 2 or 3, wherein said at least one remotely and/or autonomously controlled means for holding (105) indirectly and/or directly at least a portion of tree trunk is configured to move directly or indirectly on ground and/or move directly or indirectly up and/or down on a tree trunk and/or configured to move directly or indirectly from one tree to another tree.

5. The system according to claim 1, 2, 3 or 4, wherein said means for detecting said at least one tree parameter and/or at least one growing condition comprising a camera and/or a database with digital information about said at least a portion of a tree and/or a tree within a predetermined distance from said at least a portion of a tree.

6. The system according to any one of claim 1-5, wherein said UAV and said means configured for holding directly and/or indirectly at least a portion of a tree trunk are communicating with each other via one or more of Wifi, Bluetooth, radio communication, optical fibre and/or electrical wire.

7. The system according to any one of claim 1-6, further comprising means configured for automatically detecting a final destination and/or locating a tree in a predetermined area and/or locating a tree at a final destination.

8. The system according to claim 7, wherein said means configured for automatically locating a tree in a predetermined area comprising at least a Global Navigation Satellite System (GNSS) or a digital transmitter configured to be attached to a tree and to communicate with the UAV.

9. The system according to any one of the preceding claims, further comprising a synchronization unit for synchronizing the movement of at least two UAVs for cutting, holding, delimbing, harvesting and/or debarking said at least a portion of a tree trunk.

10. The system according to any one of the preceding claims, further comprising means for determining the number of UAVs to be used together for transporting, cutting, delimbing, harvesting, debarking and/or holding said at least a portion of a tree trunk depending on at least one tree parameter and/or the distance between an original location of said at least a portion of a tree trunk to a final destination.

11. The system according to any one of the preceding claims, further comprising means configured for selecting at least a portion of a tree trunk to be transported, cut, held, delimbed, harvested and/or debarked depending on at least one detected tree parameter and/or at least one detected growing condition of said tree trunk to be transported and/or of another portion of a tree from which said tree trunk originates and/or of at least one tree grown within a predetermined distance from said tree trunk to be transported and/or a tree at said final destination.

12. The system according to any one of the preceding claims, further comprising means configured for selecting at least one cutting position on at least a portion of a tree trunk depending on the at least one detected tree parameter and/or the at least one detected growing condition of at least a portion of a tree.

13. The system according to any one of the preceding claims, further comprising means configured for directing said at least one remotely and/or autonomously controlled UAV with at least a portion of a tree trunk to a final destination a certain point in time where said final destination and/or said certain point in time is depending on at least one detected tree parameter and/or at least one detected growing condition of said transported portion of a tree and/or of a remaining portion of a tree and/or of at least one tree grown within a predetermined distance from said transported portion of a tree.

14. The system according to any one of the preceding claims, further comprising means configured for selecting at least a portion of a tree trunk to be harvested and/or transported depending on at least one detected tree parameter and/or at least one detected growing condition of said harvested and/or transported portion of a tree trunk and/or of a remaining portion of a tree trunk and/or of at least one tree grown within a predetermined distance from said transported and/or harvested portion of a tree trunk.

15. A method for remotely and/or autonomously holding during, before and/or after harvesting at least a portion of a tree trunk or holding at least a portion of a tree trunk during, before and/or after transporting said at least a portion of a tree trunk, said method comprising the steps of:
a1. providing a system as defined in any one of the preceding claims,
a. controlling remotely and/or autonomously at least one Unmanned Aerial Vehicle, UAV,
b. identifying said at least a portion of a tree trunk to be held,
c. operating at least one means for directly and/or indirectly holding said at least a portion of a tree trunk, where said at least one means for directly and/or indirectly holding said at least a portion of a tree trunk is integrated with or attachable to said at least one UAV,
d. detecting at least one tree parameter of said at least a portion of a tree trunk and/or at least one growing condition of said at least a portion of a tree trunk and/or detecting at least one tree parameter and/or at least one growing condition of at least one tree grown within a predetermined distance from said at least a portion of a tree trunk and/or detecting at least one tree parameter and/or at least a growing condition of a another portion of a tree from which said tree trunk originates,
wherein a direct or indirect holding position of said at least a portion of a tree trunk is depending on at least one tree parameter of said at least a portion of a tree trunk and/or at least one growing condition of said at least a portion of a tree trunk and/or depending on at least one tree parameter and/or at least one growing condition of at least one tree grown within a predetermined distance from said at least a portion of a tree trunk and/or depending on at least one tree parameter and/or at least a growing condition of a another portion of a tree from which said tree trunk originates,
wherein said means for holding is attached to said at least one UAV at least once when holding during transporting and/or harvesting said tree trunk.

16. The method according to claim 15, further comprising the step of determining the number of UAV to be used together for transporting said at least a portion of a tree trunk depending on said at least one detected tree parameter and/or said at least one detected growing condition and/or the distance between the original position of said at least a portion of a tree trunk and a final destination of said at least a portion of a tree trunk.

17. The method according to any one of claim 15-16, further comprising the step of setting up a communication link between said UAV and said means for holding said at least a portion of a tree trunk via one or more of WiFi, Bluetooth, radio communication, tele communication, optical fibre and/or electrical wire.

18. The method according to any one of claim 15-17, further comprising the step of identifying a first predetermined area within which a tree trunk is to be held by means of a Global Navigation Satellite System (GNSS), by means of at least one of a camera and/or by means of at least one optical sensor.

19. The method according to any one of claims 15-18, further comprising the step of synchronizing a movement of at least two UAVs for transportation of said at least a portion of a tree trunk away from the original location of the tree trunk to a final destination.

20. The method according to any one of claim 15-19, wherein the detection of said at least one tree parameter and/or said at least one growing condition is performed by means of a camera and/or using a database with digital information of tree in a predetermined area.

21. The method according to any one of claim 15-20, further comprising the step of selecting said at least a portion of a tree to be harvested and/or transported depending on at least one detected tree parameter and/or at least one detected growing condition of said harvested and/or transported portion of a tree and/or of a remaining portion of a tree and/or of at least one tree grown within a predetermined distance from said transported and/or harvested portion of a tree and/or at least one tree at a final destination for said harvested and/or transported tree.

22. The method according to any one of claim 15-21, further comprising the step of selecting a cutting position of a tree trunk of said at least a portion of a harvested tree trunk, at least a portion of a tree trunk to be harvested, at least a portion of a tree trunk during harvesting or at least a portion of a tree trunk during transporting depending on at least one detected tree parameter and/or at least one detected growing condition of said harvested portion of a tree trunk and/or of a remaining portion of a tree trunk and/or of at least one tree grown within a predetermined distance from said harvested portion of a tree and/or at least one tree at a final destination for said harvested and/or transported tree.

23. The method according to any one of claim 15-22, further comprising the step of transporting said at least a portion of a tree trunk, by said at least one UAV, away from the original location of said at least a portion of a tree trunk to a final destination a certain point in time, where said final destination and/or said certain point in time is depending on said at least one detected tree parameter and/or said at least one detected growing condition of said at least a portion of a tree trunk and/or of a remaining portion of a tree trunk and/or of at least one tree grown within a predetermined distance from said at least a portion of a tree trunk and/or at least one tree at a final destination for said harvested and/or transported tree.

24. The method according to any one of claim 15-23, wherein said at least one means for holding and/or said means for detecting at least a portion of a tree and/or at least one means for detecting at least one tree parameter of at least a portion of a tree and/or at least one growing condition of at least a portion of a tree is remotely and/or autonomously controlled.

## Patentansprüche

1. Ein System (10) zum ferngesteuerten und/oder autonomen Halten wenigstens eines Abschnitts eines geernteten Baumstamms und/oder wenigstens eines Abschnitts eines zu erntenden Baumstamms und/oder wenigstens eines Abschnitts eines Baumstamms während des Erntens und/oder wenigstens eines Abschnitts eines Baumstamms vor, während und/oder nach dem Transportieren des besagten wenigstens einen Abschnitts eines Baumstamms, wobei das besagte System (10) Folgendes aufweist:
a. wenigstens ein ferngesteuert und/oder autonom gesteuertes Unbemanntes Luftfahrzeug (100), UAV,
b. wenigstens ein Mittel (105) zum direkten und/oder indirekten Festhalten an wenigstens einem Abschnitt eines Baumstamms, wobei das besagte wenigstens eine Mittel (105) zum Halten an dem besagten UAV anbringbar oder in dieses integriert ist,
c. wenigstens ein Mittel zum Erfassen wenigstens eines Abschnitts eines Baums,
d. wenigstens ein Mittel zum Erfassen wenigstens eines Baumparameters von wenigstens einem Abschnitt eines Baums und/oder wenigstens einer Wachstumsbedingung von wenigstens einem Abschnitt eines Baums,
e. wenigstens eine Basisstation (120) zur Kommunikation mit dem besagten UAV,
f. wenigstens ein Mittel, das eingerichtet ist zum Lenken des besagten wenigstens einen Mittels (105) zum Halten an wenigstens einem Abschnitt eines Baumstamms, wobei das besagte Halten direkt oder indirekt an wenigstens einem Abschnitt eines Baumstamms, zu einer bestimmten Position von wenigstens einem Abschnitt des Baumstamms in Abhängigkeit von dem besagten wenigstens einen erfassten Baumparameter und/oder der besagten wenigstens einen erfassten Wachstumsbedingung eines Baums erfolgt, und/oder wenigstens ein Mittel, das eingerichtet ist zum Lenken wenigstens eines Abschnitts eines Baumstamms zu einer bestimmten Position, wobei die besagte bestimmte Position direkt oder indirekt auf dem besagten wenigstens einen Mittel zum Halten, in Abhängigkeit von dem besagten wenigstens einen erfassten Baumparameter und/oder der besagten wenigstens einen erfassten Wachstumsbedingung eines Baums ist,
wobei das besagte wenigstens eine Mittel (105) zum Halten eingerichtet ist, durch das besagte wenigstens eine UAV zu dem besagten wenigstens einen Abschnitt eines Baumstamms transportiert zu werden, der durch das besagte wenigstens eine Mittel (105) zum Halten gehalten werden soll, und/oder das besagte wenigstens eine Mittel (105) zum Halten eingerichtet ist, durch das besagte wenigstens eine UAV von dem besagten wenigstens einen Abschnitt eines Baumstamms, der durch das besagte Mittel zum Halten gehalten wird, weg transportiert zu werden, und/oder das besagte wenigstens eine Mittel (105) zum Halten an dem besagten wenigstens einen UAV wenigstens einmal befestigt ist, wenn es den besagten Baumstamm während des Transportierens und/oder Erntens hält.

2. Das System nach Anspruch 1, wobei das besagte wenigstens eine Mittel, das eingerichtet ist zum Lenken des besagten wenigstens einen Mittels zum Halten, und/oder das besagte wenigstens eine Mittel, das eingerichtet ist zum Lenken wenigstens eines Abschnitts eines Baumstamms, ferngesteuert und/oder autonom gesteuert ist.

3. Das System nach Anspruch 1 oder 2, wobei das besagte System ferner wenigstens ein Mittel zum Entasten, wenigstens ein Mittel zum Entrinden, wenigstens ein Mittel zum Schneiden und/oder wenigstens ein Mittel zum Ernten aufweist.

4. Das System nach Anspruch 1, 2 oder 3, wobei das besagte wenigstens eine ferngesteuert und/oder autonom gesteuerte Mittel (105) zum indirekten und/oder direkten Halten wenigstens eines Abschnitts eines Baumstamms eingerichtet ist, sich direkt oder indirekt auf dem Boden zu bewegen und/oder sich direkt oder indirekt an einem Baumstamm nach oben und/oder unten zu bewegen und/oder eingerichtet ist, sich direkt oder indirekt von einem Baum zu einem anderen Baum zu bewegen.

5. Das System nach Anspruch 1, 2, 3 oder 4, wobei das besagte Mittel zum Erfassen des besagten wenigstens einen Baumparameters und/oder wenigstens einer Wachstumsbedingung eine Kamera und/oder eine Datenbank mit digitalen Informationen über den besagten wenigstens einen Abschnitt eines Baums und/oder einen Baum innerhalb eines vorbestimmten Abstands von dem besagten wenigstens einen Abschnitt eines Baums aufweist.

6. Das System nach einem der Ansprüche 1-5, wobei das besagte UAV und das besagte Mittel, das eingerichtet ist zum direkten und/oder indirekten Halten wenigstens eines Abschnitts eines Baumstamms, miteinander über eines oder mehrere von WiFi, Bluetooth, Funkkommunikation, Glasfaser und/oder elektrischem Kabel kommunizieren.

7. Das System nach einem der Ansprüche 1-6, ferner aufweisend ein Mittel, das eingerichtet ist zum automatischen Erfassen eines Endziels und/oder zum Orten eines Baums in einem vorbestimmten Bereich und/oder zum Orten eines Baums an einem Endziel.

8. Das System nach Anspruch 7, wobei das besagte Mittel, das eingerichtet ist zum automatischen Orten eines Baums in einem vorbestimmten Bereich, wenigstens ein Globales Navigationssatellitensystem (GNSS) aufweist, oder einen digitalen Sender, der eingerichtet ist, an einem Baum angebracht zu werden und mit dem UAV zu kommunizieren.

9. Das System nach einem der vorhergehenden Ansprüche, ferner aufweisend eine Synchronisationseinheit zum Synchronisieren der Bewegung von wenigstens zwei UAVs zum Schneiden, Halten, Entasten, Ernten und/oder Entrinden des besagten wenigstens einen Abschnitts eines Baumstamms.

10. Das System nach einem der vorhergehenden Ansprüche, ferner aufweisend ein Mittel zum Bestimmen der Anzahl von UAVs, die gemeinsam zum Transportieren, Schneiden, Entasten, Ernten, Entrinden und/oder Halten des besagten wenigstens einen Abschnitts eines Baumstamms eingesetzt werden sollen, in Abhängigkeit von wenigstens einem Baumparameter und/oder dem Abstand zwischen einem ursprünglichen Standort des besagten wenigstens einen Abschnitts eines Baumstamms und einem Endziel.

11. Das System nach einem der vorhergehenden Ansprüche, ferner aufweisend ein Mittel, das eingerichtet ist zum Auswählen wenigstens eines Abschnitts eines Baumstamms, der transportiert, geschnitten, gehalten, entastet, geerntet und/oder entrindet werden soll, in Abhängigkeit von wenigstens einem erfassten Baumparameter und/oder wenigstens einer erfassten Wachstumsbedingung des besagten zu transportierenden Baumstamms und/oder eines anderen Abschnitts eines Baums, von dem der besagte Baumstamm stammt, und/oder wenigstens eines Baums, der innerhalb eines vorbestimmten Abstands von dem besagten zu transportierenden Baumstamm gewachsen ist, und/oder eines Baums an dem besagten Endziel.

12. Das System nach einem der vorhergehenden Ansprüche, ferner aufweisend ein Mittel, das eingerichtet ist zum Auswählen wenigstens einer Schnittposition auf wenigstens einem Abschnitt eines Baumstamms in Abhängigkeit von dem wenigstens einen erfassten Baumparameter und/oder der wenigstens einen erfassten Wachstumsbedingung von wenigstens einem Abschnitt eines Baums.

13. Das System nach einem der vorhergehenden Ansprüche, ferner aufweisend ein Mittel, das eingerichtet ist zum Lenken des besagten wenigstens einen ferngesteuert und/oder autonom gesteuerten UAV mit wenigstens einem Abschnitt eines Baumstamms zu einem Endziel zu einem bestimmten Zeitpunkt, wobei das besagte Endziel und/oder der besagte bestimmte Zeitpunkt von wenigstens einem erfassten Baumparameter und/oder wenigstens einer erfassten Wachstumsbedingung des besagten transportierten Abschnitts eines Baums und/oder eines verbleibenden Abschnitts eines Baums und/oder wenigstens eines Baums abhängt, der innerhalb eines vorbestimmten Abstands von dem besagten transportierten Abschnitt eines Baums gewachsen ist.

14. Das System nach einem der vorhergehenden Ansprüche, ferner aufweisend ein Mittel, das eingerichtet ist zum Auswählen wenigstens eines Abschnitts eines Baumstamms, der geerntet und/oder transportiert werden soll, in Abhängigkeit von wenigstens einem erfassten Baumparameter und/oder wenigstens einer erfassten Wachstumsbedingung des besagten geernteten und/oder transportierten Abschnitts eines Baumstamms und/oder eines verbleibenden Abschnitts eines Baumstamms und/oder wenigstens eines Baums, der innerhalb eines vorbestimmten Abstands von dem besagten transportierten und/oder geernteten Abschnitt eines Baumstamms gewachsen ist.

15. Ein Verfahren zum ferngesteuerten und/oder autonomen Halten während, vor und/oder nach dem Ernten wenigstens eines Abschnitts eines Baumstamms oder zum Halten wenigstens eines Abschnitts eines Baumstamms während, vor und/oder nach dem Transportieren des besagten wenigstens einen Abschnitts eines Baumstamms, wobei das besagte Verfahren die folgenden Schritte aufweist:
a1. Bereitstellen eines Systems nach einem der vorhergehenden Ansprüche,
a. ferngesteuertes und/oder autonomes Steuern wenigstens eines Unbemannten Luftfahrzeugs, UAV,
b. Identifizieren des besagten wenigstens einen Abschnitts eines Baumstamms, der gehalten werden soll,
c. Betreiben wenigstens eines Mittels zum direkten und/oder indirekten Halten des besagten wenigstens einen Abschnitts eines Baumstamms, wobei das besagte wenigstens eine Mittel zum direkten und/oder indirekten Halten des besagten wenigstens einen Abschnitts eines Baumstamms in das besagte wenigstens eine UAV integriert oder an diesem anbringbar ist,
d. Erfassen wenigstens eines Baumparameters des besagten wenigstens einen Abschnitts eines Baumstamms und/oder wenigstens einer Wachstumsbedingung des besagten wenigstens einen Abschnitts eines Baumstamms und/oder Erfassen wenigstens eines Baumparameters und/oder wenigstens einer Wachstumsbedingung wenigstens eines Baums, der innerhalb eines vorbestimmten Abstands von dem besagten wenigstens einen Abschnitt eines Baumstamms gewachsen ist, und/oder Erfassen wenigstens eines Baumparameters und/oder wenigstens einer Wachstumsbedingung eines anderen Abschnitts eines Baums, von dem der besagte Baumstamm stammt,
wobei eine direkte oder indirekte Halteposition des besagten wenigstens einen Abschnitts eines Baumstamms von wenigstens einem Baumparameter des besagten wenigstens einen Abschnitts eines Baumstamms und/oder wenigstens einer Wachstumsbedingung des besagten wenigstens einen Abschnitts eines Baumstamms und/oder von wenigstens einem Baumparameter und/oder wenigstens einer Wachstumsbedingung wenigstens eines Baums, der innerhalb eines vorbestimmten Abstands von dem besagten wenigstens einen Abschnitt eines Baumstamms gewachsen ist, und/oder von wenigstens einem Baumparameter und/oder wenigstens einer Wachstumsbedingung eines anderen Abschnitts eines Baums, von dem der besagte Baumstamm stammt, abhängt,
wobei das besagte Mittel zum Halten an dem besagten wenigstens einen UAV wenigstens einmal befestigt ist, wenn es den besagten Baumstamm während des Transportierens und/oder Erntens hält.

16. Das Verfahren nach Anspruch 15, ferner aufweisend den Schritt des Bestimmens der Anzahl von UAV, die gemeinsam zum Transportieren des besagten wenigstens einen Abschnitts eines Baumstamms eingesetzt werden sollen, in Abhängigkeit von dem besagten wenigstens einen erfassten Baumparameter und/oder der besagten wenigstens einen erfassten Wachstumsbedingung und/oder dem Abstand zwischen der ursprünglichen Position des besagten wenigstens einen Abschnitts eines Baumstamms und einem Endziel des besagten wenigstens einen Abschnitts eines Baumstamms.

17. Das Verfahren nach einem der Ansprüche 15-16, ferner aufweisend den Schritt des Aufbauens einer Kommunikationsverbindung zwischen dem besagten UAV und dem besagten Mittel zum Halten des besagten wenigstens einen Abschnitts eines Baumstamms über eines oder mehrere von WiFi, Bluetooth, Funkkommunikation, Telekommunikation, Glasfaser und/oder elektrischem Kabel.

18. Das Verfahren nach einem der Ansprüche 15-17, ferner aufweisend den Schritt des Identifizierens eines ersten vorbestimmten Bereichs, in dem ein Baumstamm gehalten werden soll, mittels eines Globalen Navigationssatellitensystems (GNSS), mittels wenigstens einer Kamera und/oder mittels wenigstens eines optischen Sensors.

19. Das Verfahren nach einem der Ansprüche 15-18, ferner aufweisend den Schritt des Synchronisierens einer Bewegung von wenigstens zwei UAVs zum Transportieren des besagten wenigstens einen Abschnitts eines Baumstamms weg von dem ursprünglichen Standort des Baumstamms zu einem Endziel.

20. Das Verfahren nach einem der Ansprüche 15-19, wobei die Erfassung des besagten wenigstens einen Baumparameters und/oder der besagten wenigstens einen Wachstumsbedingung mittels einer Kamera und/oder unter Verwendung einer Datenbank mit digitalen Bauminformationen in einem vorbestimmten Bereich erfolgt.

21. Das Verfahren nach einem der Ansprüche 15-20, ferner aufweisend den Schritt des Auswählens des besagten wenigstens einen Abschnitts eines Baums, der geerntet und/oder transportiert werden soll, in Abhängigkeit von wenigstens einem erfassten Baumparameter und/oder wenigstens einer erfassten Wachstumsbedingung des besagten geernteten und/oder transportierten Abschnitts eines Baums und/oder eines verbleibenden Abschnitts eines Baums und/oder wenigstens eines Baums, der innerhalb eines vorbestimmten Abstands von dem besagten transportierten und/oder geernteten Abschnitt eines Baums gewachsen ist, und/oder wenigstens eines Baums an einem Endziel für den besagten geernteten und/oder transportierten Baum.

22. Das Verfahren nach einem der Ansprüche 15-21, ferner aufweisend den Schritt des Auswählens einer Schnittposition eines Baumstamms des besagten wenigstens einen Abschnitts eines geernteten Baumstamms, wenigstens eines Abschnitts eines zu erntenden Baumstamms, wenigstens eines Abschnitts eines Baumstamms während des Erntens oder wenigstens eines Abschnitts eines Baumstamms während des Transportierens in Abhängigkeit von wenigstens einem erfassten Baumparameter und/oder wenigstens einer erfassten Wachstumsbedingung des besagten geernteten Abschnitts eines Baumstamms und/oder eines verbleibenden Abschnitts eines Baumstamms und/oder wenigstens eines Baums, der innerhalb eines vorbestimmten Abstands von dem besagten geernteten Abschnitt eines Baums gewachsen ist, und/oder wenigstens eines Baums an einem Endziel für den besagten geernteten und/oder transportierten Baum.

23. Das Verfahren nach einem der Ansprüche 15-22, ferner aufweisend den Schritt des Transportierens des besagten wenigstens einen Abschnitts eines Baumstamms durch das besagte wenigstens eine UAV weg von dem ursprünglichen Standort des besagten wenigstens einen Abschnitts eines Baumstamms zu einem Endziel zu einem bestimmten Zeitpunkt, wobei das besagte Endziel und/oder der besagte bestimmte Zeitpunkt von dem besagten wenigstens einen erfassten Baumparameter und/oder der besagten wenigstens einen erfassten Wachstumsbedingung des besagten wenigstens einen Abschnitts eines Baumstamms und/oder eines verbleibenden Abschnitts eines Baumstamms und/oder wenigstens eines Baums abhängt, der innerhalb eines vorbestimmten Abstands von dem besagten wenigstens einen Abschnitt eines Baumstamms gewachsen ist, und/oder wenigstens eines Baums an einem Endziel für den besagten geernteten und/oder transportierten Baum.

24. Das Verfahren nach einem der Ansprüche 15-23, wobei das besagte wenigstens eine Mittel zum Halten und/oder das besagte Mittel zum Erfassen wenigstens eines Abschnitts eines Baums und/oder wenigstens ein Mittel zum Erfassen wenigstens eines Baumparameters von wenigstens einem Abschnitt eines Baums und/oder wenigstens einer Wachstumsbedingung von wenigstens einem Abschnitt eines Baums ferngesteuert und/oder autonom gesteuert ist.

## Revendications

1. Système (10) de maintien à distance et/ou autonome d'au moins une partie d'un tronc d'arbre récolté et/ou d'au moins une partie d'un tronc d'arbre à récolter et/ou d'au moins une partie d'un tronc d'arbre pendant la récolte et/ou d'au moins une partie d'un tronc d'arbre avant, pendant et/ou après le transport de ladite au moins une partie d'un tronc d'arbre, ledit système (10) comprenant :
a. au moins un véhicule aérien sans équipage (100), drone, contrôlé à distance et/ou de manière autonome,
b. au moins un moyen (105) de maintien direct et/ou indirect sur au moins une partie d'un tronc d'arbre, ledit au moins un moyen (105) de maintien pouvant être fixé audit drone ou intégré à celui-ci,
c. au moins un moyen de détection d'au moins une partie d'un arbre,
d. au moins un moyen de détection d'au moins un paramètre d'arbre d'au moins une partie d'un arbre et/ou d'au moins un état de croissance d'au moins une partie d'un arbre,
e. au moins une station de base (120) pour la communication avec ledit drone,
f. au moins un moyen configuré pour diriger ledit au moins un moyen (105) de maintien sur au moins une partie d'un tronc d'arbre, où ledit maintien est directement ou indirectement sur au moins une partie d'un tronc d'arbre, vers une position particulière d'au moins une partie du tronc d'arbre en fonction dudit au moins un paramètre d'arbre détecté et/ou dudit au moins un état de croissance détecté d'un arbre et/ou au moins un moyen configuré pour diriger au moins une partie d'un tronc d'arbre vers une position particulière, où ladite position particulière est directement ou indirectement sur ledit au moins un moyen de maintien, en fonction dudit au moins un paramètre d'arbre détecté et/ou dudit au moins un état de croissance détecté d'un arbre,
dans lequel ledit au moins un moyen (105) de maintien est configuré pour être transporté par ledit au moins un drone vers ladite au moins une partie d'un tronc d'arbre à maintenir par ledit au moins un moyen (105) de maintien et/ou ledit au moins un moyen (105) de maintien est configuré pour être transporté par ledit au moins un drone à l'écart de ladite au moins une partie d'un tronc d'arbre maintenue par ledit moyen de maintien et/ou ledit au moins un moyen (105) de maintien est fixé audit au moins un drone au moins une fois lors du maintien pendant le transport et/ou la récolte dudit tronc d'arbre.

2. Système selon la revendication 1, dans lequel ledit au moins un moyen configuré pour diriger ledit au moins un moyen de maintien et/ou ledit au moins un moyen configuré pour diriger au moins une partie d'un tronc d'arbre sont commandés à distance et/ou de manière autonome.

3. Système selon la revendication 1 ou 2, dans lequel ledit système comprend en outre au moins un moyen d'ébranchage, au moins un moyen d'écorçage, au moins un moyen de coupe et/ou au moins un moyen de récolte.

4. Système selon la revendication 1, 2 ou 3, dans lequel ledit au moins un moyen commandé à distance et/ou de manière autonome pour maintenir (105) indirectement et/ou directement au moins une partie de tronc d'arbre est configuré pour se déplacer directement ou indirectement sur le sol et/ou se déplacer directement ou indirectement vers le haut et/ou vers le bas sur un tronc d'arbre et/ou configuré pour se déplacer directement ou indirectement d'un arbre à un autre arbre.

5. Système selon la revendication 1, 2, 3 ou 4, dans lequel ledit moyen de détection dudit au moins un paramètre d'arbre et/ou d'au moins un état de croissance comprend une caméra et/ou une base de données avec des informations numériques sur ladite au moins une partie d'arbre et/ou un arbre à une distance prédéterminée de ladite au moins une partie d'arbre.

6. Système selon l'une quelconque des revendications 1 à 5, dans lequel ledit drone et ledit moyen configuré pour maintenir directement et/ou indirectement au moins une partie d'un tronc d'arbre communiquent entre eux via un ou plusieurs parmi Wifi, Bluetooth, communication radio, fibre optique et/ou fil électrique.

7. Système selon l'une quelconque des revendications 1 à 6, comprenant en outre un moyen configuré pour détecter automatiquement une destination finale et/ou localiser un arbre dans une zone prédéterminée et/ou localiser un arbre à une destination finale.

8. Système selon la revendication 7, dans lequel ledit moyen configuré pour localiser automatiquement un arbre dans une zone prédéterminée comprend au moins un système global de navigation par satellite (GNSS) ou un émetteur numérique configuré pour être fixé à un arbre et pour communiquer avec le drone.

9. Système selon l'une quelconque des revendications précédentes, comprenant en outre une unité de synchronisation pour synchroniser le déplacement d'au moins deux drones pour la coupe, le maintien, l'ébranchage, la récolte et/ou l'écorçage de ladite au moins une partie d'un tronc d'arbre.

10. Système selon l'une quelconque des revendications précédentes, comprenant en outre un moyen de détermination du nombre de drones à utiliser ensemble pour le transport, la coupe, l'ébranchage, la récolte, l'écorçage et/ou le maintien de ladite au moins une partie d'un tronc d'arbre en fonction dudit au moins un paramètre d'arbre et/ou de la distance entre un emplacement d'origine de ladite au moins une partie d'un tronc d'arbre et une destination finale.

11. Système selon l'une quelconque des revendications précédentes, comprenant en outre un moyen configuré pour sélectionner au moins une partie d'un tronc d'arbre à transporter, à couper, à maintenir, à ébrancher, à récolter et/ou à écorcer en fonction d'au moins un paramètre d'arbre détecté et/ou d'au moins un état de croissance détecté dudit tronc d'arbre à transporter et/ou d'une autre partie d'arbre d'où provient ledit tronc d'arbre et/ou d'au moins un arbre cultivé à une distance prédéterminée dudit tronc d'arbre à transporter et/ou d'un arbre à ladite destination finale.

12. Système selon l'une quelconque des revendications précédentes, comprenant en outre un moyen configuré pour sélectionner au moins une position de coupe sur au moins une partie d'un tronc d'arbre en fonction de l'au moins un paramètre d'arbre détecté et/ou de l'au moins un état de croissance détectée d'au moins une partie d'un arbre.

13. Système selon l'une des revendications précédentes, comprenant en outre un moyen configuré pour diriger ledit au moins un drone commandé à distance et/ou de manière autonome avec au moins une partie d'un tronc d'arbre vers une destination finale à un certain moment, où ladite destination finale et/ou ledit certain moment dépendent d'au moins un paramètre d'arbre détecté et/ou d'au moins un état de croissance détectée de ladite partie transportée d'un arbre et/ou d'une partie restante d'un arbre et/ou d'au moins un arbre cultivé à une distance prédéterminée de ladite partie transportée d'un arbre.

14. Système selon l'une quelconque des revendications précédentes, comprenant en outre un moyen configuré pour sélectionner au moins une partie d'un tronc d'arbre à récolter et/ou à transporter en fonction d'au moins un paramètre d'arbre détecté et/ou d'au moins un état de croissance détecté de ladite partie récoltée et/ou transportée d'un tronc d'arbre et/ou d'une partie restante d'un tronc d'arbre et/ou d'au moins un arbre cultivé à une distance prédéterminée de ladite partie transportée et/ou récoltée d'un tronc d'arbre.

15. Procédé de maintien à distance et/ou de manière autonome pendant, avant et/ou après la récolte d'au moins une partie d'un tronc d'arbre ou de maintien d'au moins une partie d'un tronc d'arbre pendant, avant et/ou après le transport de ladite au moins une partie d'un tronc d'arbre, ledit procédé comprenant les étapes de :
a1. la fourniture d'un système tel que défini dans l'une quelconque des revendications précédentes,
a. la commande à distance et/ou de manière autonome d'au moins un véhicule aérien sans équipage, drone,
b. l'identification de ladite au moins une partie d'un tronc d'arbre à maintenir,
c. l'exploitation d'au moins un moyen pour maintenir directement et/ou indirectement ladite au moins une partie d'un tronc d'arbre, où ledit au moins un moyen pour maintenir directement et/ou indirectement ladite au moins une partie d'un tronc d'arbre est intégré audit au moins un drone ou peut y être fixé,
d. la détection d'au moins un paramètre d'arbre de ladite au moins une partie d'un tronc d'arbre et/ou d'au moins un état de croissance de ladite au moins une partie d'un tronc d'arbre et/ou la détection d'au moins un paramètre d'arbre et/ou d'au moins un état de croissance d'au moins un arbre cultivé à une distance prédéterminée de ladite au moins une partie d'un tronc d'arbre et/ou la détection d'au moins un paramètre d'arbre et/ou d'au moins un état de croissance d'une autre partie d'un arbre d'où provient ledit tronc d'arbre,
dans lequel une position de maintien direct ou indirect de ladite au moins une partie d'un tronc d'arbre dépend d'au moins un paramètre d'arbre de ladite au moins une partie d'un tronc d'arbre et/ou d'au moins un état de croissance de ladite au moins une partie d'un tronc d'arbre et/ou dépend d'au moins un paramètre d'arbre et/ou d'au moins un état de croissance d'au moins un arbre cultivé à une distance prédéterminée de ladite au moins une partie d'un tronc d'arbre et/ou dépend d'au moins un paramètre d'arbre et/ou d'au moins un état de croissance d'une autre partie d'un arbre d'où provient ledit tronc d'arbre,
dans lequel ledit moyen de maintien est fixé audit au moins un drone au moins une fois lors du maintien pendant le transport et/ou la récolte dudit tronc d'arbre.

16. Procédé selon la revendication 15, comprenant en outre l'étape de détermination du nombre de drones à utiliser ensemble pour transporter ladite au moins une partie d'un tronc d'arbre en fonction dudit au moins un paramètre d'arbre détecté et/ou dudit au moins un état de croissance détecté et/ou de la distance entre la position d'origine de ladite au moins une partie d'un tronc d'arbre et une destination finale de ladite au moins une partie d'un tronc d'arbre.

17. Procédé selon l'une quelconque des revendications 15 à 16, comprenant en outre l'étape d'établissement d'une liaison de communication entre ledit drone et ledit moyen de maintien de ladite au moins une partie d'un tronc d'arbre via un ou plusieurs parmi WiFi, Bluetooth, communication radio, télécommunication, fibre optique et/ou fil électrique.

18. Procédé selon l'une quelconque des revendications 15 à 17, comprenant en outre l'étape d'identification d'une première zone prédéterminée à l'intérieur de laquelle un tronc d'arbre doit être maintenu au moyen d'un système global de navigation par satellite (GNSS), au moyen d'au moins une caméra et/ou au moyen d'au moins un capteur optique.

19. Procédé selon l'une quelconque des revendications 15 à 18, comprenant en outre l'étape de synchronisation d'un mouvement d'au moins deux drones pour transporter ladite au moins une partie d'un tronc d'arbre à l'écart de l'emplacement d'origine du tronc d'arbre vers une destination finale.

20. Procédé selon l'une quelconque des revendications 15 à 19, dans lequel la détection dudit au moins un paramètre d'arbre et/ou dudit au moins un état de croissance est réalisée au moyen d'une caméra et/ou à l'aide d'une base de données avec des informations numériques d'arbre dans une zone prédéterminée.

21. Procédé selon l'une quelconque des revendications 15 à 20, comprenant en outre l'étape de sélection de ladite au moins une partie d'un arbre à récolter et/ou à transporter en fonction d'au moins un paramètre d'arbre détecté et/ou d'au moins un état de croissance détecté de ladite partie récoltée et/ou transportée d'un arbre et/ou d'une partie restante d'un arbre et/ou d'au moins un arbre cultivé à une distance prédéterminée de ladite partie transportée et/ou récoltée d'un arbre et/ou d'au moins un arbre à une destination finale pour ledit arbre récolté et/ou transporté.

22. Procédé selon l'une quelconque des revendications 15 à 21, comprenant en outre l'étape de sélection d'une position de coupe d'un tronc d'arbre de ladite au moins une partie d'un tronc d'arbre récolté, au moins une partie d'un tronc d'arbre à récolter, au moins une partie d'un tronc d'arbre pendant la récolte ou au moins une partie d'un tronc d'arbre pendant le transport en fonction d'au moins un paramètre d'arbre détecté et/ou d'au moins un état de croissance détecté de ladite partie récoltée d'un tronc d'arbre et/ou d'une partie restante d'un tronc d'arbre et/ou d'au moins un arbre cultivé à une distance prédéterminée de ladite partie récoltée d'un arbre et/ou d'au moins un arbre à une destination finale pour ledit arbre récolté et/ou transporté.

23. Procédé selon l'une quelconque des revendications 15 à 22, comprenant en outre l'étape de transport de ladite au moins une partie d'un tronc d'arbre, par ledit au moins un drone, à l'écart de l'emplacement d'origine de ladite au moins une partie d'un tronc d'arbre vers une destination finale à un certain moment, où ladite destination finale et/ou ledit moment dépendent dudit au moins un paramètre d'arbre détecté et/ou dudit au moins un état de croissance détecté de ladite au moins une partie d'un tronc d'arbre et/ou d'une partie restante d'un tronc d'arbre et/ou d'au moins un arbre cultivé à une distance prédéterminée de ladite au moins une partie d'un tronc d'arbre et/ou d'au moins un arbre à une destination finale pour ledit arbre récolté et/ou transporté.

24. Procédé selon l'une quelconque des revendications 15 à 23, dans lequel ledit au moins un moyen de maintien et/ou ledit moyen de détection d'au moins une partie d'un arbre et/ou au moins un moyen de détection d'au moins un paramètre d'arbre d'au moins une partie d'un arbre et/ou d'au moins un état de croissance d'au moins une partie d'un arbre sont commandés à distance et/ou de manière autonome.
